(19) Europäisches Patentamt
European Patent Office
Office européen des brevets

(11) **EP 3 033 660 B1**

(12) **EUROPEAN PATENT SPECIFICATION**

(45) Date of publication and mention
of the grant of the patent:
**22.08.2018 Bulletin 2018/34**

(51) Int Cl.:
*G06F 3/044* <sup>(2006.01)</sup>　　*G06F 3/041* <sup>(2006.01)</sup>

(21) Application number: **14747503.2**

(86) International application number:
**PCT/US2014/047888**

(22) Date of filing: **23.07.2014**

(87) International publication number:
**WO 2015/023410 (19.02.2015 Gazette 2015/07)**

(54) **TOUCH PANEL ELECTRODE STRUCTURE FOR USER GROUNDING CORRECTION**

ELEKTRODENSTRUKTUR EINES BERÜHRUNGSBILDSCHIRMS FÜR BENUTZERERDUNGSKORREKTUR

STRUCTURE D'ÉLECTRODES D'ÉCRAN TACTILE POUR LA CORRECTION DE LA MISE À LA TERRE PAR UN UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2013 US 201361866849 P**
**15.11.2013 US 201314082074**
**15.11.2013 US 201314082003**

(43) Date of publication of application:
**22.06.2016 Bulletin 2016/25**

(73) Proprietor: **Apple Inc.**
**Cupertino CA 95014 (US)**

(72) Inventors:
• **YOUSEFPOR, Marduke**
**Cupertino, CA 95014 (US)**
• **SHAHPARNIA, Shahrooz**
**Cupertino, CA 95014 (US)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
WO-A1-2011/137200　　US-A1- 2011 025 629
US-A1- 2012 044 199　　US-A1- 2012 154 324

**Description**

**Field**

This relates generally to capacitance touch panels and, more specifically, to touch panels capable of measuring both mutual and self capacitance and touch panel electrode structures to correct user grounding.

**Background**

Many types of input devices are presently available for performing operations in a computing system, such as buttons or keys, mice, trackballs, joysticks, touch panels, touch screens and the like. Touch sensitive devices, and touch screens in particular, are quite popular because of their ease and versatility of operation as well as their affordable prices. A touch sensitive device can include a touch panel, which can be a clear panel with a touch sensitive surface, and a display device such as a liquid crystal display (LCD) that can be positioned partially or fully behind the panel so that the touch sensitive surface can cover at least a portion of the viewable area of the display device. The touch sensitive device can allow a user to perform various functions by touching or hovering over the touch panel using a finger, stylus or other object at a location often dictated by a user interface (UI) being displayed by the display device. In general, the touch sensitive device can recognize a touch or hover event and the position of the event on the touch panel, and the computing system can then interpret the event in accordance with the display appearing at the time of the event, and thereafter can perform one or more actions based on the event.
In some instances, it can be difficult to distinguish between a touch event and a hover event or between an actual event and a false event. This difficulty can be exacerbated when there are adverse conditions at the touch panel, such as poor grounding of the touching or hovering object, the presence of water droplets on the touch panel, or noise introduced into the touch panel. For example, when the object touching or hovering over the touch panel is poorly grounded, output values indicative of a touch or hover event can be erroneous or otherwise distorted. The possibility of such erroneous or distorted values can further increase when two or more simultaneous events occur at the touch panel. The erroneous or distorted values can be particularly problematic when they impact the panel's ability to distinguish between a touching object and a hovering object.

US 2012/154324 A1 discloses a method for locating a conductive object at a touch-sensing surface may include detecting a first resolved location for the conductive object at the touch-sensing surface based on a first scan of the touch-sensing surface, predicting a location for the conductive object, and determining a second resolved location for the conductive object by performing a second scan of a subset of sensor elements of the touch-sensing surface, wherein the subset of sensor elements is selected based on the predicted location of the conductive object.

US 2011/025629 A1 discloses a method of operating a touch-sensing surface which includes determining a presence of at least one conductive object at the touch-sensing surface by performing a search measurement of a first set of sensor elements of the touch-sensing surface, and in response to determining the presence of the at least one conductive object, determining a location of the at least one conductive object by performing a tracking measurement of a second set of sensor elements of the touch-sensing surface.

**Summary**

The invention is defined by the independent claims. The dependent claims define advantageous embodiments. This relates to measuring both mutual and self capacitance in a touch panel. A method can include measuring self capacitance and mutual capacitance at various electrode patterns of the touch panel and, based on the self capacitance measurements, the mutual capacitance measurements, or both, calculating a touch signal indicative of an object touching or hovering over the touch panel. In some examples, the touch panel can be a row-column electrode pattern. In some examples, the touch panel can have a pixelated electrode pattern. In some examples, the self capacitance measurements, the mutual capacitance measurements, or both can be used to determine a correction factor, indicative of an adverse condition at the touch panel, and the correction factor used to correct the touch signal for the adverse condition. By measuring both mutual and self capacitance, the touch panel can advantageously provide more accurate and faster touch signal detection, as well as power savings, and more robustly adapt to various adverse conditions.

This also relates to a touch panel electrode structure for user grounding correction in a touch panel. The electrode structure can include an array of electrodes for sensing a touch at the panel, and multiple jumpers for selectively coupling groups of the electrodes together to form electrode rows and columns that cross each other. In some examples, the array can have a linear configuration and can form the rows and columns by coupling diagonally adjacent electrodes using the jumpers in a zigzag pattern. In alternate examples, the array can have a diamond configuration and can form the rows and columns by coupling linearly adjacent electrodes using the jumpers in a linear pattern. The electrode structure can advantageously correct for poor user grounding conditions and mitigate noise, e.g., AC adapter noise, in the panel, thereby providing more accurate and faster touch signal detection, as well as power savings, and more robustly adapt to various grounding conditions of a user. The electrode structure can further mitigate noise in the panel.

**Brief Description of the Drawings**

FIG. 1 illustrates an exemplary method for correcting for user grounding in touch signals using mutual and self capacitance touch measurements according to various examples.

FIG. 2 illustrates an exemplary user grounding condition in a touch panel with a row-column electrode configuration according to various examples.

FIG. 3 illustrates an exemplary method for correcting for user grounding in touch signals using mutual and self capacitance touch measurements from multiple row-column electrode patterns according to various examples.

FIGs. 4 through 7 illustrate exemplary row-column electrode patterns for measuring mutual and self capacitance touch measurements to correct for user grounding in touch signals according to various examples.

FIG. 8A illustrates another exemplary method for correcting for user grounding in touch signals using mutual and self capacitance touch measurements from multiple row-column electrode patterns according to various examples.

FIG. 8B illustrates still another exemplary method for correcting for user grounding in touch signals using mutual and self capacitance touch measurements from multiple row-column electrode patterns according to various examples.

FIG. 9 illustrates an exemplary row-column electrode structure on which to measure mutual and self capacitances to correct for user grounding in touch signals according to various examples.

FIG. 10 illustrates an exemplary user grounding condition in a touch panel with a pixelated electrode configuration according to various examples.

FIG. 11 illustrates an exemplary method for correcting for user grounding in touch signals using mutual and self capacitance touch measurements from multiple pixelated electrode patterns according to various examples.

FIGs. 12 through 18B illustrate exemplary pixelated electrode patterns for measuring mutual and self capacitance touch measurements to correct for user grounding in touch signals according to various examples.

FIG. 19 illustrates another exemplary method for correcting for user grounding in touch signals using mutual and self capacitance touch measurements from multiple pixelated electrode patterns according to various examples.

FIGs. 20A and 20B illustrate other exemplary pixelated electrode patterns for measuring mutual and self capacitance touch measurements to correct for user grounding in touch signals according to various examples.

FIG. 21 illustrates an exemplary method for correcting for user grounding in touch signals using self capacitance touch measurements from multiple pixelated electrode patterns according to various examples.

FIGs. 22 through 25 illustrate exemplary pixelated electrode patterns for measuring self capacitance touch measurements to correct for user grounding in touch signals according to various examples.

FIG. 26 illustrates an exemplary pixelated electrode structure on which to measure mutual and self capacitances to correct for user grounding in touch signals according to various examples.

FIG. 27 illustrates an exemplary system for correcting for user grounding in touch signals using mutual and self capacitance touch measurements according to various examples.

FIGs. 28 through 30 illustrate exemplary personal devices that can use mutual and self capacitance touch measurements to correct for user grounding in touch signals according to various examples.

FIG. 31 illustrates exemplary touch and water scenarios on a touch panel that can affect touch signals according to various examples.

FIGs. 32 through 37 illustrate additional exemplary row-column electrode structures on which to measure mutual and self capacitances to correct for user grounding in touch signals according to various examples.

**Detailed Description**

In the following description of the disclosure and examples, reference is made to the accompanying drawings in which it is shown by way of illustration specific examples that can be practiced. It is to be understood that other examples can be practiced and structural changes can be made without departing from the scope of the disclosure.

This relates to measuring both mutual and self capacitance in a touch panel. A method can include measuring self capacitance and mutual capacitance at various electrode patterns of the touch panel and, based on the self capacitance measurements, the mutual capacitance measurements, or both, calculating a touch signal indicative of an object touching or hovering over the touch panel. In some examples, the touch panel can be a row-column electrode pattern. In some examples, the touch panel can have a pixelated electrode pattern. In some examples, the self capacitance measurements, the mutual capacitance measurements, or both can be used to determine a correction factor, indicative of an adverse condition at the touch panel, and the correction factor used to correct the touch signal for the adverse condition. By measuring both mutual and self capacitance, the touch panel can advantageously provide more accurate and faster touch signal detection, as well as power savings, and more robustly adapt to various adverse conditions.

This also relates to a touch panel electrode structure for user grounding correction in a touch panel. The electrode structure can include an array of electrodes for sensing a touch at the panel, and multiple jumpers for selectively coupling groups of the electrodes together to form electrode rows and columns that cross each other. In some examples, the array can have a linear configuration and can form the rows and columns by coupling diagonally adjacent electrodes using the jumpers in a zigzag pattern. In alternate examples, the array can have a diamond configuration and can form the rows and columns by coupling linearly adjacent electrodes using the jumpers in a linear pattern. The electrode structure can advantageously correct for poor user grounding conditions and mitigate noise, e.g., AC adapter noise, in the panel, thereby providing more accurate and faster touch signal detection, as well as power savings, and more robustly adapt to various grounding conditions of a user. The electrode structure can further mitigate noise in the panel.

The electrode structure can advantageously correct for poor user grounding conditions and/or mitigate noise, e.g., AC adapter noise, in the panel, thereby providing more accurate and faster touch signal detection, as well as power savings, and more robustly adapt to various grounding conditions of a user.

The terms "poorly grounded," "ungrounded," "not grounded," "not well grounded," "improperly grounded," "isolated," and "floating" can be used interchangeably to refer to poor grounding conditions that can exist when a user is not making a low impedance electrical coupling to the ground of the touch panel.

The terms "grounded," "properly grounded," and "well grounded" can be used interchangeably to refer to good grounding conditions that can exist when a user is making a low impedance electrical coupling to the ground of the touch panel.

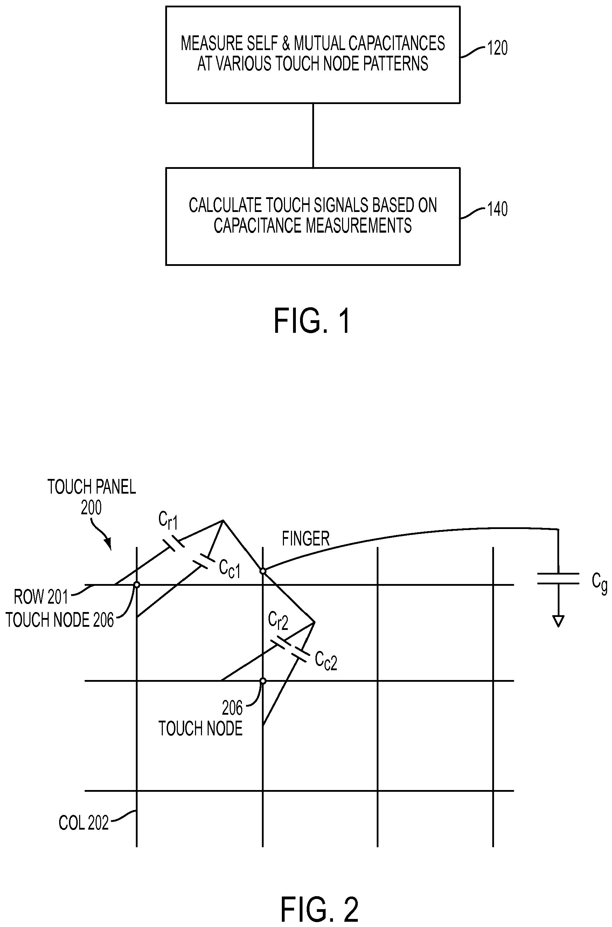

FIG. 1 illustrates an exemplary method for user grounding correction of a touch signal in a touch panel of a touch sensitive device. In the example of FIG. 1, self capacitance and mutual capacitance at various electrode patterns of the panel can be measured to assess the user's grounding condition (120). Based on the self capacitance measurements, the mutual capacitance measurements, or both, a user grounding correction factor can be determined for a touch signal (130). The correction factor can then be used to calculate the touch signal corrected for any poor grounding conditions of the user (140). Several variations of this method will be described in more detail below.

One type of touch panel can have a row-column electrode pattern. FIG. 2 illustrates an exemplary user grounding condition for this type of touch panel. In the example of FIG. 2, touch panel 200 can include an array of touch nodes 206 formed at the crossing points of row conductive traces 201 and column conductive traces 202, although it should be understood that other node configurations can be employed. Each touch node 206 can have an associated mutual capacitance $C_m$ formed between the crossing row traces 201 and column traces 202.

When a well-grounded user's finger (or other object) touches or hovers over the panel 200, the finger can cause the capacitance $C_m$ to reduce by an amount $\Delta C_m$ at the touch location. This capacitance change $\Delta C_m$ can be caused by charge or current from a stimulated row trace 201 being shunted through the touching (or hovering) finger to ground rather than being coupled to the crossing column trace 202 at the touch location. Touch signals representative of the capacitance change $\Delta C_m$ can be transmitted by the column traces 104 to sense circuitry (not shown) for processing. The touch signals can indicate the touch node 206 where the touch occurred and the amount of touch that occurred at that node location.

However, as illustrated in FIG. 2, when a poorly grounded user's finger (or other object) touches or hovers over the panel 200, the finger can form one or more secondary capacitive paths back into the panel rather than to ground.

In this example, the finger can be within detectable distance of two touch nodes 206, one node formed by the first row r1 and first column c1 and the other node formed by the second row r2 and second column c2. A finger capacitance Cr1 to the row trace r1, a finger capacitance Cc1 to the column trace c1, and a finger capacitance Cg to user ground can form one secondary path for coupling charge from stimulated row trace r1 back into the panel via column trace c1. Similarly, a finger capacitance Cr2 to the row trace r2, a finger capacitance Cc2 to the column trace c2, and a finger capacitance Cg to user ground can form another secondary path. As a result, instead of the capacitance Cm of the touch node at the touch location being reduced by $\Delta$Cm, Cm may only be reduced by ($\Delta$Cm - Cneg), where Cneg can represent a so-called "negative capacitance" resulting from the charge coupled into the crossing column trace due to the finger's poor grounding. The touch signals can still generally indicate the touch node 206 where the touch occurred, but with an indication of a lesser amount of touch than actually occurred.

Accordingly, detecting the negative capacitance and correcting the touch signals for the negative capacitance, using a user grounding correction method, can improve touch detection of the touch panel in poor user grounding conditions.

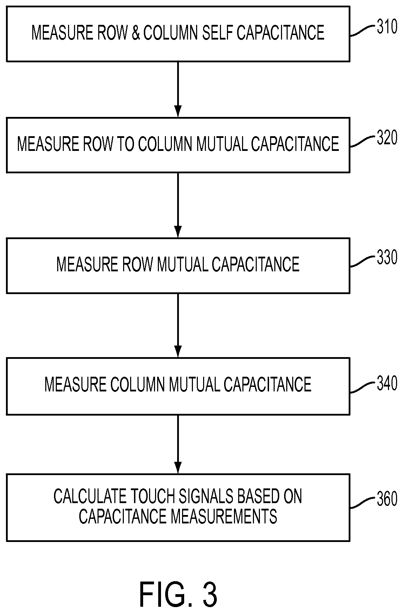

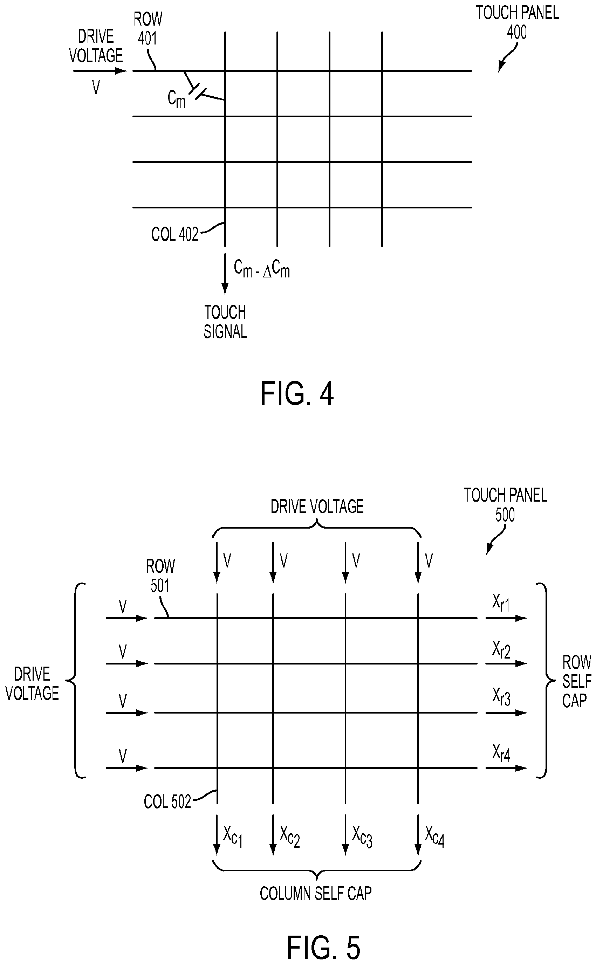

FIG. 3 illustrates an exemplary method for user grounding correction of a touch signal in the row-column touch panel of FIG. 2. In the example of FIG. 3, a touch panel can capture self and mutual capacitances at various row-column electrode patterns in the panel so as to measure the user's grounding condition and calculate a touch signal using the user grounding measurement to correct the touch signal for any poor grounding conditions. Accordingly, the panel can measure self capacitances Xr, Xc of the row and column traces, respectively, in the panel (310). FIG. 5 illustrates an exemplary row-column electrode pattern measuring row and column self capacitances, using a boot strap operation. In the example of FIG. 5, row traces 501 and column traces 502 can be stimulated simultaneously by stimulation signals V provided by drive circuitry (not shown) that can include an alternating current (AC) waveform and can transmit self capacitances Xr, Xc to sense circuitry (not shown) that can include a sense amplifier for the column sense trace 402. Accordingly, the self capacitances Xr, Xc can be measured in a single operation.

In some examples, a touch panel can include a grounding plate underlying the row and column traces and can have gaps between the traces, such that portions of the plate are exposed to a finger proximate (i.e., touching or hovering over) to the traces. A poorly grounded finger and the exposed plate can form a secondary capacitive path that can affect a touch signal. Accordingly, while stimulating the row and column traces, the plate can be stimulated by the stimulation signals V as well so that the row and column self capacitance measurements include the grounding conditions associated with the plate.

Referring again to FIG. 3, after measuring the self capacitances, the panel can measure row-to-column mutual capacitance Cm (or Yrc) of row and column traces in the panel (320). FIG. 4 illustrates an exemplary row-column electrode pattern measuring row-to-column mutual capacitances. In the example of FIG. 4, touch panel 400 can including row trace 401 functioning as a drive line and column trace 402 functioning as a sense line, where the row and column traces can form mutual capacitance Cm at their crossing. The row drive trace 401 can be stimulated by stimulation signals V provided by drive circuitry (not shown) and the column sense trace 402 can transmit touch signal (Cm - $\Delta$Cm), indicative of a touch at the panel 400, to sense circuitry (not shown).

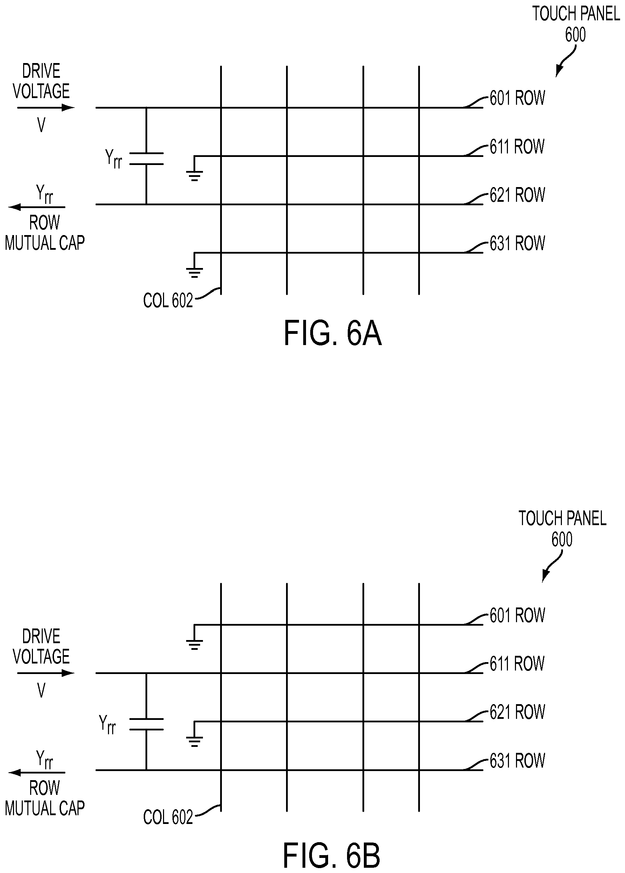

Referring again to FIG. 3, after measuring the row-to column mutual capacitances, the panel can measure row-to-row mutual capacitances Yrr of row traces in the panel (330). FIGs. 6A and 6B illustrate exemplary row-row electrode patterns measuring row-to-row mutual capacitances. In the example of FIG. 6A, touch panel 600 can be configured to form a row-row electrode pattern of the first row 601 as a drive trace, the second row 611 as a ground trace, the third row 621 as a sense trace, the fourth row 631 as another ground trace, and the pattern repeated for the remaining rows. The row drive and sense traces 601, 621 can form mutual capacitance Yrr therebetween. The row drive trace 601 can be stimulated by stimulation signals V provided by drive circuitry (not shown) and the row sense trace 621 can transmit mutual capacitance Yrr to sense circuitry (not shown). To ensure that mutual capacitances are measured for all the rows, the panel 600 can be configured to form another row-row electrode pattern of the first row 601 as a ground trace, the second row 611 as a drive trace, the third row 621 as another ground trace, the fourth row 631 as a sense trace, and the pattern repeated for the remaining rows, as illustrated in FIG. 6B. Like the previous pattern, the row drive trace 611 can be stimulated and the row sense trace 631 can transmit the mutual capacitance Yrr. Accordingly, the mutual capacitances Yrr can be measured in a first operation at one row-row electrode pattern, followed by a second operation at the other row-row electrode pattern. In some examples, the row drive traces can be stimulated one at a time. In some examples, multiple row drive traces can be stimulated at the same time.

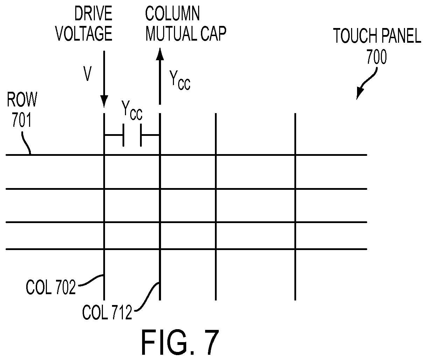

Referring again to FIG. 3, after measuring the row-to-row mutual capacitances, the panel can measure column-to-column mutual capacitances Ycc of column traces in the panel (340). FIG. 7 illustrates an exemplary column-column electrode pattern measuring column-to-column mutual capacitance. In the example of FIG. 7, touch panel 700 can be configured to form a column-column electrode pattern of the first column 702 as a drive trace, the second column 712 as a sense trace, and the pattern repeated for the remaining columns. The column drive and sense traces 702, 712 can form mutual capacitance Ycc therebetween. The column drive trace 702 can be stimulated by stimulation signals V provided by drive circuitry (not shown) and the column sense trace 712 can transmit mutual capacitance Ycc to sense circuitry (not shown). Accordingly, the mutual capacitances Ycc can be measured in one operation at the column-column electrode pattern. In some examples, the column drive traces can be stimulated one at a time. In some examples, multiple column drive traces can be stimulated as the same time.

As illustrated in FIGs. 6A and 6B, a row trace can be configured as a ground trace to separate the row drive and sense traces. This can be done when the traces are very close together so as to avoid strong mutual capacitances between adjacent traces affected by a finger proximate thereto, which can adversely affect the trace-to-trace mutual capacitance measurements. Conversely, as illustrated in FIG. 7, a column ground trace can be omitted. This can be done when the traces are far enough apart so that weaker mutual capacitances between adjacent traces cannot be affected by a finger proximate thereto, so as to not adversely affect the trace-to-trace mutual capacitance measurements. Accordingly, in alternate examples, the row-row electrode pattern can include the first row as a drive trace, the second row as a sense trace, and the pattern repeated for the remaining rows, as illustrated in FIG. 7. Similarly, in alternate examples, one column-column electrode pattern can include the first column as a drive trace, the second column as a ground trace, the third column as a sense trace, the fourth column as another ground trace, and the pattern repeated for the remaining columns, as illustrated in FIG. 6A. Another column-column electrode pattern can include the first column as a ground trace, the second column as a drive trace, the third column as another ground trace, the fourth column as a sense trace, and the pattern repeated for the remaining columns, as illustrated in FIG. 6B. These and other example patterns are possible according to the panel specifications.

Referring again to FIG. 3, after measuring the column-to-column mutual capacitances, a user grounding correction factor can be determined based on the self and mutual capacitance measurements (350) and the correction factor can be used to calculate a touch signal corrected for user poor grounding conditions (360). Equation (1) can be used to calculate the corrected touch signal.

$$\Delta Cm_{ij,actual} = \Delta Cm_{ij} + K \cdot Xr_i Xc_j \qquad (1)$$

where $\Delta Cm_{ij,actual}$ = the grounding corrected touch signal of the touch node at row trace i and column trace $j$, $\Delta Cm_{ij}$ = the measured touch signal of the touch node at row trace $i$ and column trace $j$, $Xr_i$ = self capacitance measurement of row trace $i$, $Xc_j$ = self capacitance measurement of column trace $j$, and K = $f$ ($Xr_i$, $Xc_j$, $Yr_ir_k$, $Yc_jc_l$), where K is a function of $Xr_i$, $Xc_j$, $Yr_ir_k$ (mutual capacitance measurement of row trace $i$ to row trace $k$), and $Yc_jc_l$ (mutual capacitance measurement of column trace $j$ to column trace $l$), and indicative of the user's grounding condition. In some examples, K can be determined through empirical analysis of the capacitance measurements.

In alternate examples, K can be determined from an estimate based on negative capacitance measurements, where K = $f$ ($\Delta Cm_{ij} < 0$), such that row-to-row and column-to-column mutual capacitance measurements can be omitted.

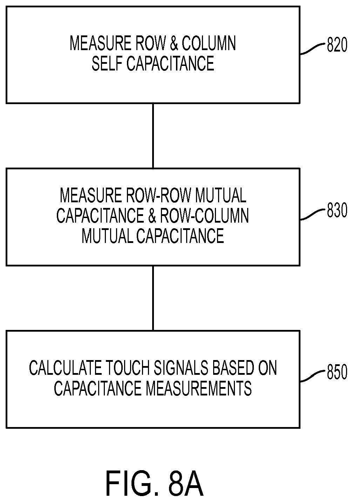

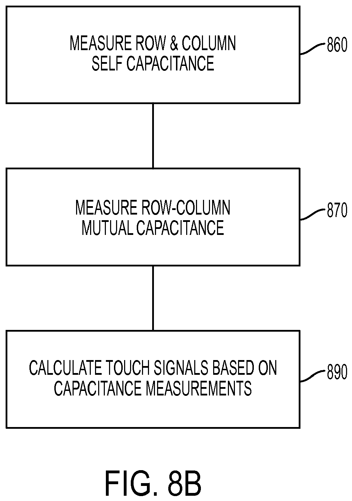

FIG. 8A illustrates another exemplary method for user grounding correction of a touch signal in the row-column touch panel of FIG. 2. The FIG. 8B method is similar to the FIG. 3 method, but can replace the measuring of the column-to-column mutual capacitance with the measuring of row-to-column mutual capacitance and can measure the row-to-column mutual capacitance simultaneously with the row-to-row mutual capacitance. In the example of FIG. 8A, a touch panel can simultaneously measure row and column self capacitance, as illustrated in FIG. 5 (820). The panel can measure row-to-row mutual capacitance, as illustrated in FIGs. 6A and 6B, and additionally measure row-to-column mutual capacitance at the same time, as illustrated in FIG. 4 (830). A user grounding correction factor can be determined based on the self and mutual capacitance measurements (840) such that K =$f$ ($Xr_i$, $Xc_j$, $Yr_ir_k$) and used to calculate a touch signal corrected for user poor grounding conditions (850). In some examples, this method can decrease the measurement time by omitting the separate column-to-column mutual capacitance operation. Reducing measurement time can be desirable in a touch sensitive device that includes a display device along with the touch panel, because the shorter measurement time can occur during the display's blanking (or updating) period, thereby avoiding interference from the display on the measurements.

FIG. 8B illustrates another exemplary method for user grounding correction of a touch signal in the row-column touch panel of FIG. 2. The FIG. 8B method is similar to the FIG. 8A method, but can omit the measuring of the row-to-row mutual capacitance. In the example of FIG. 8B, a touch panel can simultaneously measure row and column self capacitance, as illustrated in FIG. 5 (860). The panel can measure row-to-column mutual capacitance, as illustrated in FIG. 4 (870). A user grounding correction factor can be determined based on the row and col mutual capacitance measurements (880) and used to calculate a touch signal corrected for user poor grounding conditions (890). Here, K = $f$ ($\Delta Cm_{ij} < 0$).

In an alternate method, rather than using the correction factor to calculate a touch signal (890), the mutual capacitance measurement Yricj (mutual capacitance measurement of row trace i to column trace j, or Cmij) can be used to determine the touch signal unless the $\Delta Cm_{ij}$ measurement indicates a negative capacitance. In which case, the self capacitance measurements Xr, Xc can be used to determine the touch signal.

It should be understood that the row-column electrode patterns are not limited to those illustrated in FIGs. 5 through 7, but can include other or additional patterns suitable for measuring self and mutual capacitance of row and column traces in the touch panel. For example the row-column electrode pattern can be configured to include a first row trace as a drive trace, a second row trace as a ground trace, followed by multiple row traces as sense traces to form mutual capacitances with the first row trace, followed by another row trace as another ground trace, and the pattern repeated for the remaining row traces. In an alternate example, the row-column electrode pattern can be configured to include a first row trace as a drive trace, followed by multiple row traces as sense traces to form mutual capacitances with the first row trace, and the pattern repeated for the remaining row traces. Similar patterns can be configured for the column traces.

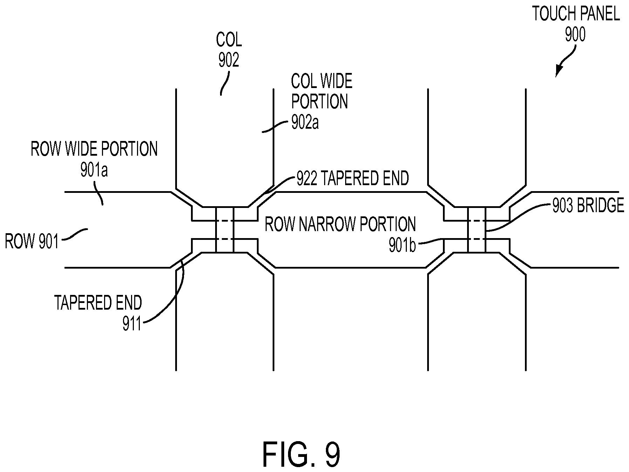

In addition to applying a user grounding correction factor to a touch signal, the structure of the row and column traces can be designed so as to mitigate poor grounding conditions. FIG. 9 illustrates an exemplary row-column electrode structure that can be used. In the example of FIG. 9, touch panel 900 can include row traces 901 and column traces 902. Row trace 901 can form a single trace with alternate wider portions 901a having tapered ends 911 and narrower portions 901b at the tapered ends. Column trace 902 can form separate wider portions 902a having tapered ends 922 that are connected together by conductive bridge 903. The bridge 903 of the column trace 902 can cross the narrower portion 901b of the row trace 901. This structure can advantageously maximize the row-to-column mutual capacitance forming touch signals, while minimizing trace area that can be affected by noise introduced by the stimulation signals V, row-to-row and/or column-to-column mutual capacitance that can negatively affect touch signals, and row and column to ground capacitance that can negatively affect touch signals.

In alternate examples, the row traces 901 can have separate wider portions and conductive bridges that connect together the wider portions, like the column traces 902. In other alternate examples, the column traces 902 can form single traces with alternate wider and narrower portions.

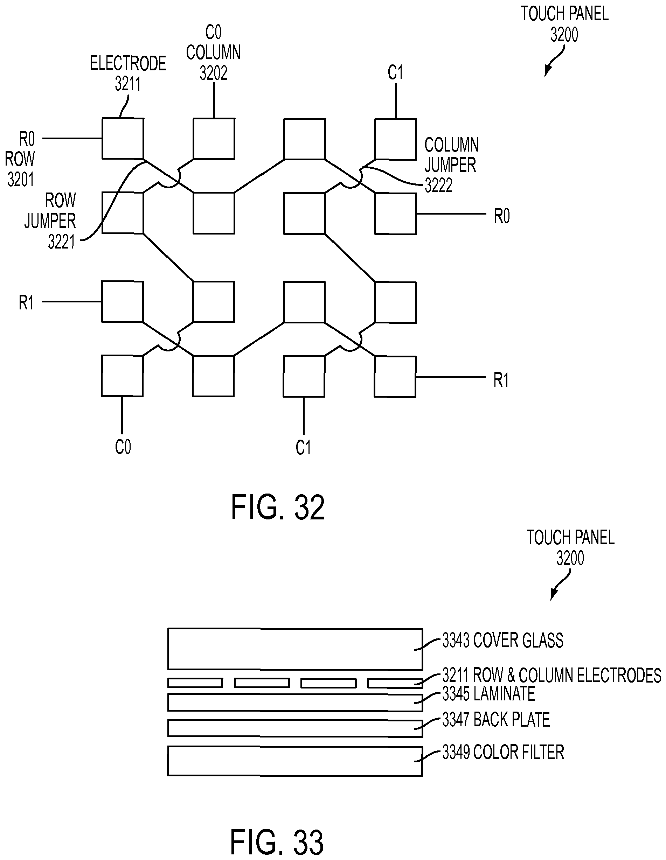

FIGs. 32 through 37 illustrate additional exemplary row-column electrode structures that can be used. As described previously, these structures can advantageously minimize the electrode area that can be affected by noise introduced into the panel and row-to-row and/or column-to-column mutual capacitance that can negatively affect touch signals. Additionally, these structures can minimize the size of touch needed to correct for user grounding. For example, by minimizing the row-to-row and column-to-column mutual capacitances in these structures, adjacent rows and columns need not be spaced farther apart or have a ground electrode or trace therebetween. As such, a user's finger (through which the mutual capacitances can be measured) can touch a smaller area of the panel so as to encompass requisite electrode rows and columns. In some examples, the touch size can be a 2x2 electrode row-column area. In some examples, the touch size can be a 3x3 electrode row-column area.

In the example of FIG. 32, touch panel 3200 can include multiple electrodes 3211, where some of the electrodes can be coupled to conductive jumpers (or bridges) 3221 to form electrode rows 3201 and conductive jumpers (or bridges) 3222 to form electrode columns 3202. Here, the rows 3201 can be substantially horizontal in a zigzag pattern and the columns 3012 substantially vertical in another zigzag pattern. Some of the jumpers 3221, 3222 can cross to form mutual capacitances between their respective rows 3201 and columns 3202. Here, a row zigzag pattern can refer to a first electrode 3211 in a first array row and column, coupled to a second electrode in a second array row and column, coupled to a third electrode in the first array row and third array column, coupled to a fourth electrode in the second array row and fourth array column, and so on, where the zigzag can be between the first and second array rows. Similarly, a column zigzag pattern can refer to a first electrode 3211 in a first array row and second array column, coupled to a second electrode in a second array row and first array column, coupled to a third electrode in a third array row and the second array column, coupled to a fourth electrode in a fourth array row and the first array column, and so on, where the zigzag can be between the first and second array columns.

FIG. 33 illustrates a partial stack-up of the structure of FIG. 32. In the example of FIG. 32, touch panel 3200 can include cover glass 3343 having a touchable surface that a user can touch or hover over and an under surface proximate to the row-column electrode structure of FIG. 32. In some examples, the cover glass 3343 can be glass, plastic, polymer, or any suitable transparent material. In some examples, the row-electrode structure can be indium-tin-oxide (ITO) or any suitable transparent, conductive material. The touch panel 3200 can also include laminate 3345 on the row-column electrode structure to cover and protect the structure. The laminate can be any suitable protective material. The touch panel 3200 can further include back plate 3347 proximate to the laminate 3345 to act as a shield and color filter 3349 proximate to the back plate to provide color information. In some examples, the back plate can be ITO.

This stack-up can similarly be used for any of the other electrodes structures described herein, e.g., FIGs. 9, 26, and 34-37, with their electrode structures replacing the FIG. 32 structure in the stack-up.

Touch panel electrode structures can be subject to noise from other elements either internal or external to the panel. One particular element that can introduce noise into the structures can be a power adapter, e.g., an AC adapter, connected to the panel to provide power. The adapter noise can couple to the electrodes and negatively affect the mutual capacitance therein. To reduce this adapter noise, the electrode areas can be reduced so as to reduce the amount of noise coupling.

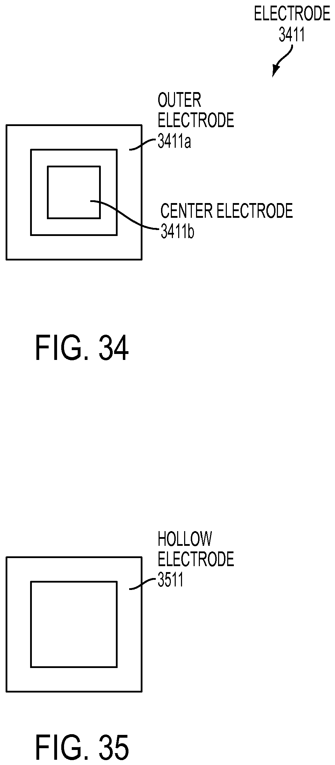

FIG. 34 illustrates a row-column electrode with a reduced electrode area so as to reduce adapter noise. In the example of FIG. 34, electrode 3411 can have outer electrode 3411a and center electrode 3411b, in which the center electrode can float so as to reduce noise coupling and row-to-row and/or column-to-column mutual capacitances. In some examples, the back plate (as illustrated in FIG. 33, element 3347) proximate to the center electrode 3411b can be stimulated by stimulation voltage V concurrently with a row electrode (as illustrated in FIG. 32, element 3201) so as to minimize the row and column to ground capacitance that can negatively affect touch signals. The electrode 3411 in FIG. 34 can replace the electrode 3211 in FIG. 32, so as to form electrode rows 3201 and columns 3202 using the electrodes 3411.

FIG. 35 illustrates a row-column electrode with a hollow electrode area so as to reduce adapter noise. FIG. 35 is similar to FIG. 34 with the center electrode removed. In the example of FIG. 35, electrode 3511 can have its center hollowed out. The electrode 3511 in FIG. 35 can replace the electrode 3211 in FIG. 32, so as to form electrode rows 3201 and columns 3202 using the electrodes 3511.

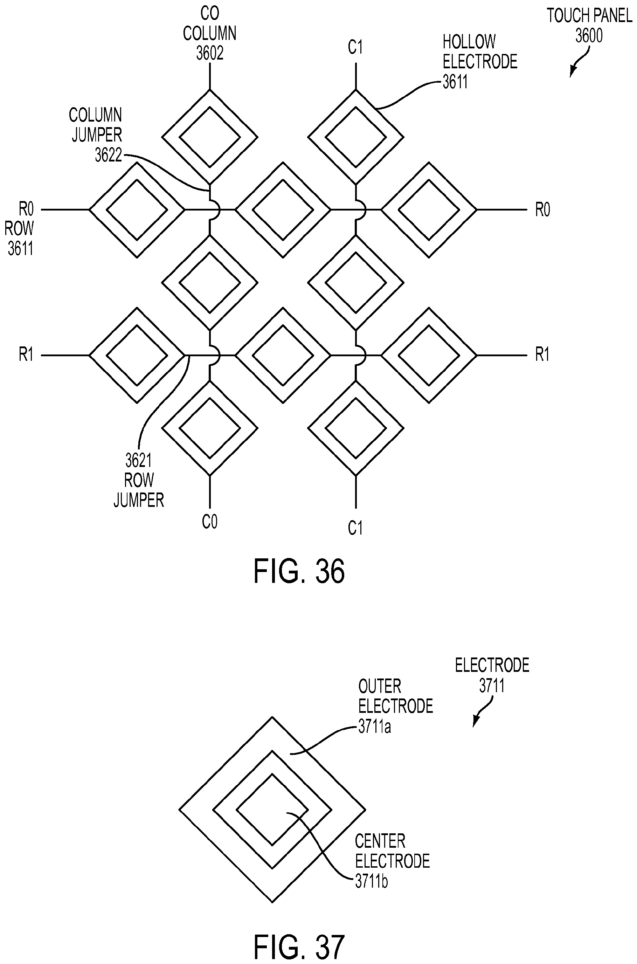

FIG. 36 illustrates a row-column electrode structure having a diamond configuration and hollow electrode areas so as to reduce adapter noise. FIG. 36 is similar to FIG. 34 with a diamond configuration rather than a square configuration. In the example of FIG. 36, touch panel 3600 can include multiple electrodes 3611, where some of the electrodes can be coupled to conductive jumpers (or bridges) 3621 to form electrode rows 3601 and conductive jumpers (or bridges) 3122 to form electrode columns 3602. Here, the rows 3601 can be horizontal and the columns 3602 can be vertical. The jumpers 3621, 3622 can cross to form mutual capacitances between the rows 3601 and columns 3602. The electrodes 3611 can be hollow in their centers.

FIG. 37 illustrates a row-column electrode with a reduced electrode area so as to reduce adapter noise. FIG. 37 is similar to FIG. 34 with a diamond configuration rather than a square configuration. In the example of FIG. 37, electrode 3711 can have outer electrode 3711a and center electrode 3711b, where the center electrode can float. The electrode 3711 of FIG. 37 can replace the electrode 3611 of FIG. 36, so as to form electrode rows 3601 and columns 3602 with the electrodes 3711.

In alternate examples, the electrodes in the diamond configuration can have solid electrode areas with tapered corners like the row and column traces of FIG. 9 to form hexagonal shapes and with jumpers (or bridges) connecting some of the electrodes in horizontal rows and others of the electrodes in vertical columns. The jumpers can cross to form mutual capacitances between the rows and columns.

The row-column electrode structures of FIGs. 32 through 37 can be used to perform the methods of FIGs. 3 and 8 to correct user grounding.

Water can be introduced into a row-column touch panel in a variety of ways, e.g., humidity, perspiration, or a wet touching object, and can cause problems for the panel because the water can couple with any row or column in the panel to form a mutual capacitance, making it difficult to distinguish between the water and a touch or hover event. Moreover, the water can create a negative capacitance in the panel, particularly, when it shares row and/or column traces with the touch or hover event.

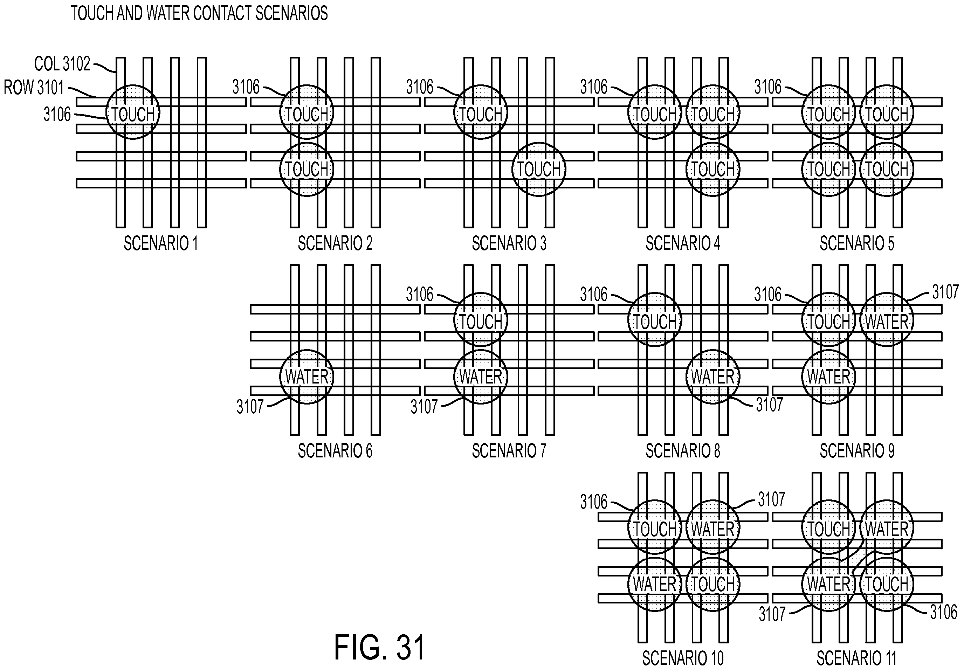

FIG. 31 illustrates exemplary water and touch scenarios that a row-column touch panel can encounter which can cause the difficulties described above. In the example of FIG. 31, scenario 1 illustrates a single touch 3106 without water at the row traces 3101 and column traces 3102 of the panel. Scenarios 2 through 5 illustrate multiple touches 3106 without water at various locations on the panel. Scenario 6 illustrates a water droplet 3107 without a touch on the panel. Scenarios 7 through 11 illustrate one or more water droplet 3107 and one or more touch 3106 at various locations on the panel at the same time, where the water and the touch share row and/or column traces. Scenario 11 illustrates the water droplets 3107 converging to create a larger water blob on the panel. It should be understood that these scenarios are for exemplary purposes only, as other scenarios are also possible.

The methods of FIGs. 3, 8A and 8B, the patterns of FIGs. 5 through 7, and the structure of FIG. 9 can be used to correct a touch signal for water effects. In the example of FIG. 3, after the self and mutual capacitance measurements are captured (310-340), the user grounding correction factor can be calculated (350). The correction factor can then be used to calculate a touch signal corrected for any poor user grounding condition and for water effects (360). As described previously, the user grounding correction factor K can be a function of the row self capacitance measurement Xr, the column self capacitance measurement Xc, the mutual capacitance measurement between row traces Yrr, and the mutual capacitance measurement between column traces Ycc. Water can generally contribute to the mutual capacitance measurements, causing the correction factor K to be larger than it should be. As a result, the correction factor K can overcorrect in the touch signal calculations to generate overcompensated false touches at the water contact locations on the panel, particularly when a touch or hover event and a water droplet share the same row and/or column traces. Once the touch signal is corrected, the water locations can be identified based on the fact that the water touch signal will still remain negative. In some examples, the touch signals calculated at the identified water locations can be discarded. In some examples, the touch signal calculations can be skipped at the identified water locations.

In an alternate example, when the row-to-column mutual capacitances are measured (320), the water locations can be identified from these measurements, as described previously. The row-to-row and column-to-column mutual capacitances Yrr, Ycc can then be selectively measured at the non-water locations (330 - 340) so that the correction factor K is not overestimated.

In the example of FIG. 8B, rather than using the user grounding correction factor to calculate a touch signal (890), the mutual capacitance measurement Yrc, measured in (870), can be used to determine the touch signal unless the Yrc measurement indicates the presence of water, e.g., a negative capacitance. In which case, the self capacitance measurements Xr, Xc, measured in (860), can be used to determine the touch signal.

Various user grounding conditions and water effects can be corrected in touch signals at a touch panel according to various examples described herein. In one example, when a poorly grounded user's ten fingers and two palms are touching in close proximity on the panel, negative capacitance can affect some or all of the touch signals, e.g., the ring and index finger touch signals can be substantially impacted by negative capacitance. Applying the correction methods described herein, the negative capacitance effects can be corrected and the correct touch signals recovered at the correct locations on the panel.

In a second example, water patches can be added to the touch conditions in the first example, e.g., with the water patches disposed between the thumbs and the palms, causing negative capacitance from both the fingers' proximity and the water. Applying the correction methods described herein, the negative capacitance effects can be corrected in the touch signals to recover the actual touch signals at the correct locations on the panel and to minimize the false touches caused by the water.

In a third example, when water patches are large compared to fingers touching on the panel, the water substantially contribute to the negative capacitance so as to overwhelm the touch signals. Applying the correction methods described herein, the water locations can either be skipped or the calculated touch signals involving the water locations discarded so that the actual touch signals can be recovered at the correct locations on the panel without any false touches caused by water.

In a fourth example, two users can be touching the panel, where one user is well grounded and the other user is poorly grounded. In some cases, the well-grounded user can effectively ground the poorly grounded user such that the poorly grounded user's effect on the touch signals is lower. Accordingly, applying the correction methods described herein, lesser correction can be made to the touch signals, compared to the poorly grounded user alone touching the panel.

In a fifth example, display noise can be introduced into the touch conditions of the first example, causing touch signal interference in addition to the negative capacitance due to poor grounding. Applying the correction methods described herein, the negative capacitance effects can be corrected and the noise minimized such that the correct touch signals are recovered at the correct locations on the panel.

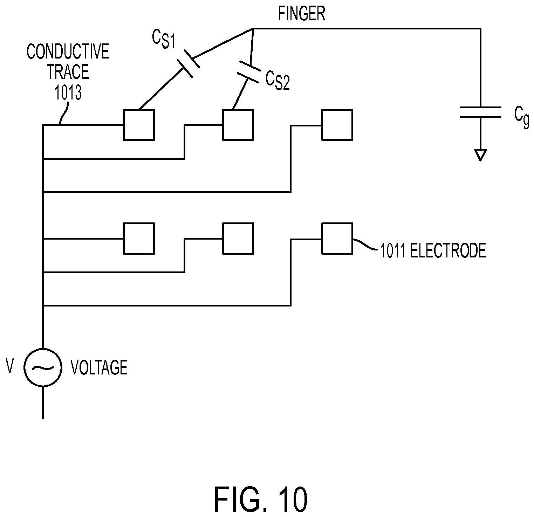

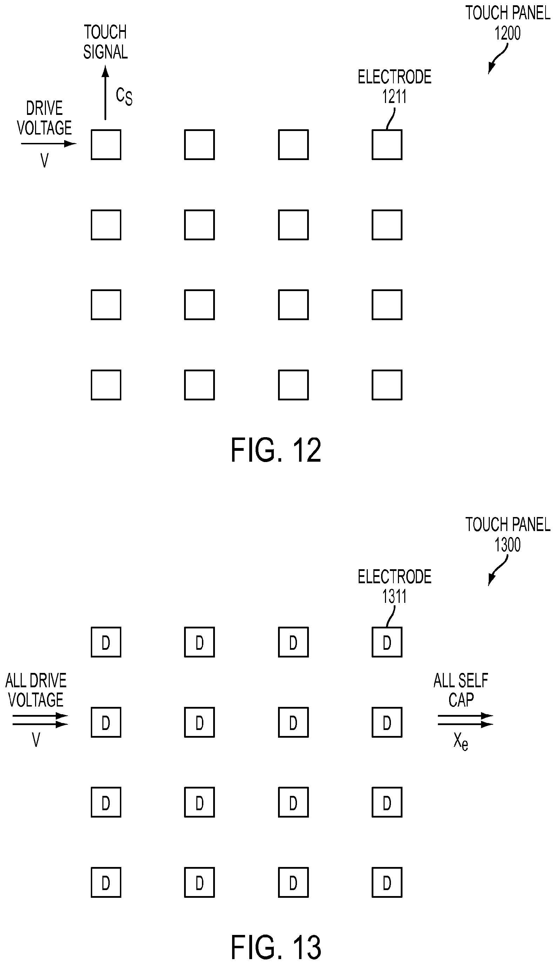

Another type of touch panel can have a pixelated electrode pattern. FIG. 10 illustrates an exemplary user grounding condition for this type of panel. In the example of FIG. 10, touch panel 1000 can include an array of individual touch electrodes 1011, although it should be understood that other electrode configurations can be employed. Each electrode 1011 can have conductive trace 1013 coupled thereto to drive the electrode with drive voltage V and a sensor trace (not shown) to transmit touch signals to sensing circuitry. Each electrode 1011 can have an associated self capacitance relative to ground and can form self capacitance Cs with a proximate finger (or other object). FIG. 12 illustrates an exemplary pixelated touch panel capturing a touch signal. In the example of FIG. 12, touch panel 1200 can include touch electrode 1211, which can be driven by drive voltage V provided by drive circuitry (not shown) to form capacitance Cs with a finger, indicative of a touch at the panel 1200. The touch signal Cs can be transmitted to sense circuitry (not shown).

Referring again to FIG. 10, when a well-grounded user's finger (or other object) touches or hovers over the panel 1000, the finger can form a self capacitance Cs with the electrode 1011 at the touch location. This capacitance can be caused by charge or current from driven conductive trace 1013 to the electrode 1011. In some examples, the electrodes 1011 can be coupled to and driven by the same voltage source. In other examples, the electrodes 1011 can each be coupled to and driven by different voltage sources. Touch signals representative of the capacitance Cs can be transmitted by sensor traces to sense circuitry (not shown) for processing. The touch signals can indicate the electrode 1011 where the touch occurred and the amount of touch that occurred at that electrode location.

However, as illustrated in FIG. 10, when a poorly grounded user's finger (or other object) touches or hovers over the panel 100, the capacitance Cg can be poor such that the capacitance Cs formed between the electrode 1011 and the user's finger is different from what it should be. In this example, the finger can be within detectable distance of two electrodes 1011. A finger capacitance Cs1 to the first electrode and a finger capacitance Cs2 to the second electrode can form. However, because user to ground capacitance Cg is poor, the finger capacitance Cs1, Cs2 can be incorrect. Based on the incorrect capacitance Cs1, Cs2, the panel 1000 can fail to differentiate between a touching, but poorly grounded finger and a hovering, but well-grounded finger.

Accordingly, detecting the poor grounding and correcting the touch signals for the poor grounding, using a user grounding correction method, can improve touch detection of the touch panel in poor user grounding conditions.

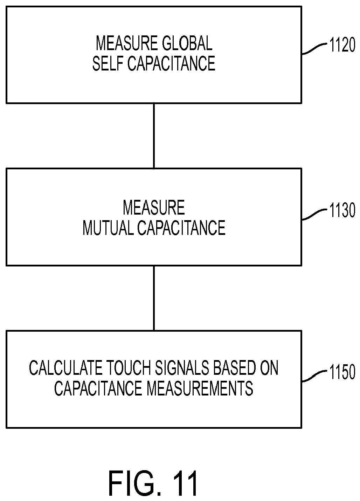

FIG. 11 illustrates an exemplary method for user grounding correction of a touch signal in the pixelated touch panel of FIG. 10. In the example of FIG. 11, a touch panel can capture self and mutual capacitances at various pixelated electrode patterns in the panel so as to measure the user's grounding condition and calculate a touch signal using the user grounding measurement to correct the touch signal for any poor grounding conditions. Accordingly, the panel can measure global self capacitances Xe of the electrodes in the panel (1120). FIG. 13 illustrates an exemplary pixelated touch panel measuring global self capacitances, using a boot strap operation. In the example of FIG. 13, electrodes 1311 can be driven simultaneously by drive voltage V provided by drive circuitry (not shown) and can transmit self capacitances Xe to sense circuitry (not shown). The label "D" on each electrode 1311 can indicate that the electrode is being driven. Accordingly, the self capacitances Xe can be measured in a single operation.

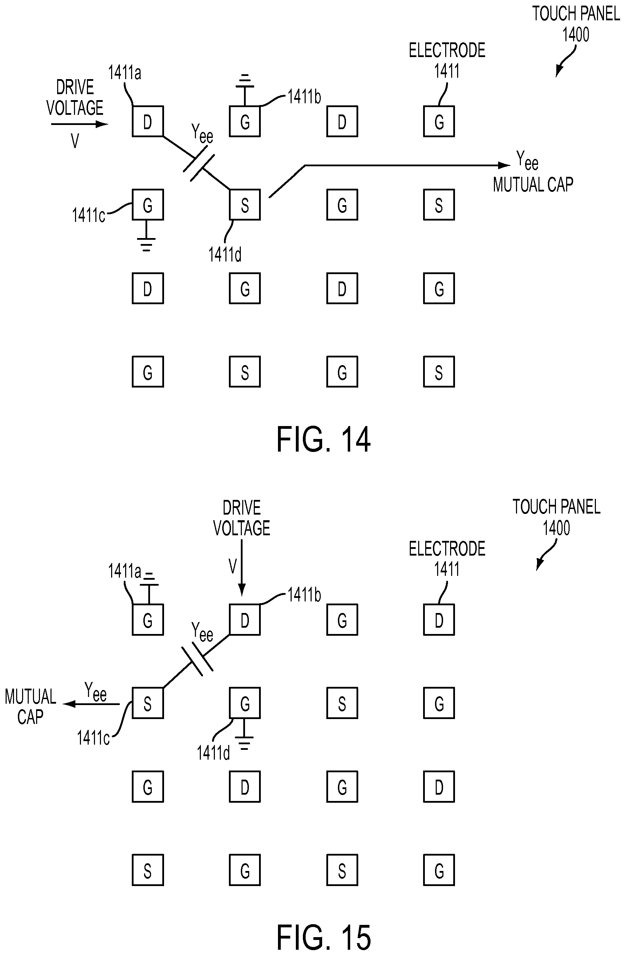

Referring again to FIG. 11, after measuring the global self capacitances, the panel can measure mutual capacitances Yee between diagonal electrodes in the panel (1130). FIGs. 14 through 17 illustrate exemplary pixelated electrode patterns measuring electrode mutual capacitances. In the example of FIG. 14, touch panel 1400 can be configured to form a pixelated electrode pattern with electrode 1411a as a drive electrode, horizontally adjacent electrode 1411b as a ground electrode, vertically adjacent electrode 1411c as another ground electrode, diagonal electrode 1411d as a sense electrode, and the pattern repeated for the remaining electrodes. The label "D" on certain electrodes 1411 can indicate the electrode is being driven, the label "G," the electrode being grounded, and the label "S," the electrode sensing mutual capacitance. The drive electrode 1411a and the sense electrode 1411d can form mutual capacitance Yee therebetween. The drive electrode 1411a can be driven by drive voltage V provided by drive circuitry (not shown) and the sense electrode 1411d can transmit mutual capacitance Yee to sense circuitry (not shown).

To ensure that mutual capacitances are measured for all the electrodes, the panel can be configured to form a second pixelated electrode pattern by rotating the pattern of FIG. 14 clockwise 45 degrees. FIG. 15 illustrates the second pixelated electrode pattern. In the example of FIG. 15, touch panel 1400 can be configured to form a pixelated electrode pattern with electrode 1411a now as a ground electrode, electrode 1411b as a drive electrode, electrode 1411c as a sense electrode, electrode 1411d as another ground electrode, and the pattern repeated for the remaining electrodes. The drive electrode 1411b and the sense electrode 1411c can form mutual capacitance Yee therebetween.

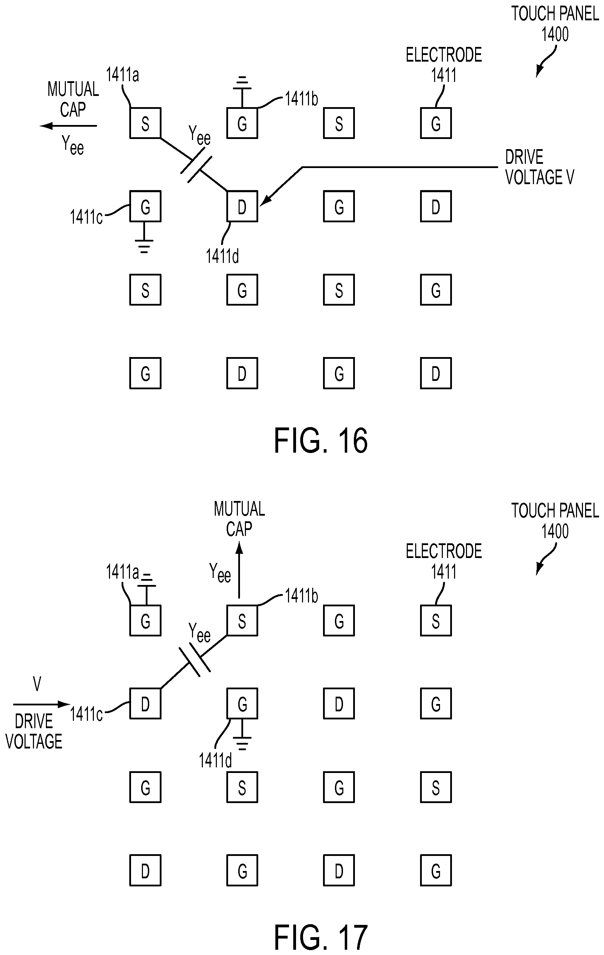

Generally, the patterns of FIGs. 14 and 15 can be sufficient to measure mutual capacitances between electrodes. However, two more patterns as illustrated in FIGs. 16 and 17 can be used for additional measurements to average with the measurements obtained from the patterns of FIGs. 14 and 15. FIG. 16 illustrates a third pixelated electrode pattern formed by rotating the pattern of FIG. 15 clockwise 45 degrees. In the example of FIG. 16, touch panel 1400 can be configured to form a pixelated electrode pattern with electrode 1411a now as a sense electrode, electrode 1411b as a ground electrode, electrode 1411c as another ground electrode, electrode 1411d as a drive electrode, and the pattern repeated for the remaining electrodes. The drive electrode 1411d and the sense electrode 1411a can form mutual capacitance Yee therebetween.

FIG. 17 illustrates a fourth pixelated electrode pattern formed by rotating the pattern of FIG. 16 clockwise 45 degrees. In the example of FIG. 17, touch panel 1400 can be configured to form a pixelated electrode pattern with electrode 1411a now as a ground electrode, electrode 1411b as a sense electrode, electrode 1411c as a drive electrode, electrode 1411d as another ground electrode, and the pattern repeated for the remaining electrodes. The drive electrode 1411c and the sense electrode 1411b can form mutual capacitance Yee therebetween. Accordingly, the mutual capacitances Yee can be measured in either two operations (FIGs. 14 and 15 patterns) or four operations (FIGs. 14 through 17 patterns).

As described previously, when all four patterns are used, the mutual capacitances can be averaged. For example, the mutual capacitances between electrodes 1411a, 1411d, measured using the patterns of FIGs. 14 and 16, can be averaged to provide the mutual capacitance Yee between these two electrodes. Similarly, the mutual capacitances between electrodes 1411b, 1411c, measured using the patterns of FIGs. 15 and 17, can be averaged to provide the mutual capacitance Yee between these two electrodes. The same can be done for the remaining electrodes in the panel.

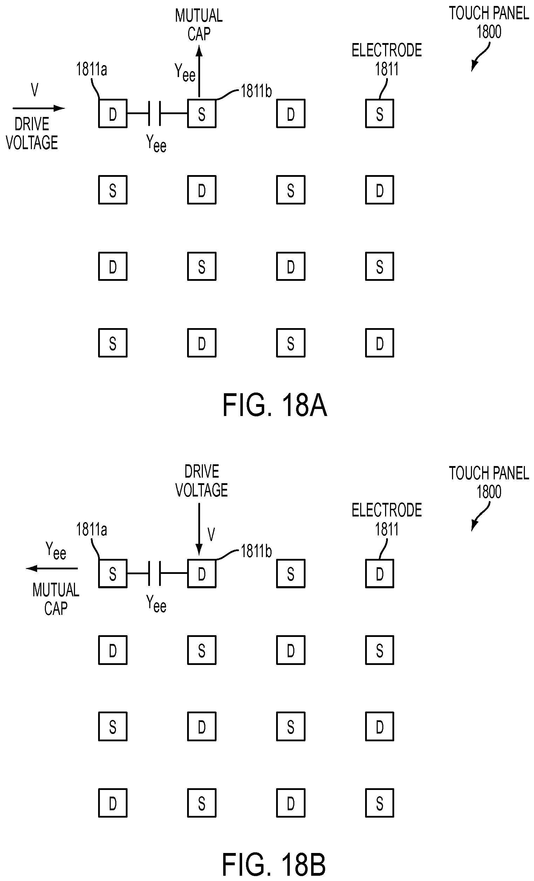

FIGs. 18A and 18B illustrate alternate pixelated electrode patterns measuring electrode mutual capacitances that can replace the patterns of FIGs. 14 through 17. In the example of FIG. 18A, touch panel 1800 can be configured to form a pixelated electrode pattern with electrode 1811a as a drive electrode, horizontally adjacent electrode 1811b as a sense electrode, and the pattern repeated for the remaining electrodes. The label "D" on certain electrodes 1811 can indicate the electrode is being driven and the label "S," the electrode sensing mutual capacitance. Unlike the patterns of FIGs. 14 through 17, the patterns of FIG. 18A can omit grounding certain electrodes. The drive electrode 1811a and the sense electrode 1811b can form mutual capacitance Yee therebetween. The drive electrode 1811a can be driven by drive voltage V provided by drive circuitry (not shown) and the sense electrode 1811b can transmit mutual capacitance Yee to sense circuitry (not shown).

Generally, the pattern of FIG. 18A can be sufficient to measure mutual capacitances between electrodes. However, a second pattern as illustrated in FIG. 18B can be used for additional measurements to average with the measurements obtained from the pattern of FIG. 18A. In the example of FIG. 18B, touch panel 1800 can be configured to form a pixelated electrode pattern with electrode 1811a now as a sense electrode, electrode 1811b as a drive electrode, and the pattern repeated for the remaining electrodes. The drive electrode 1811b and the sense electrode 1811a can form mutual capacitance Yee therebetween. Accordingly, the mutual capacitances Yee can be measured in either one operation (FIG. 18A pattern) or two operations (FIGs. 18A and 18B patterns). The mutual capacitances between electrodes 1811a, 1811b measured using the two patterns of FIGs. 18A and 18B can be averaged to provide the mutual capacitance Yee between the two electrodes. The same can be done for the remaining electrodes in the panel.

It should be understood that the pixelated electrode patterns are not limited to those illustrated in FIGs. 14 through 18B, but can include other or additional patterns suitable for measuring self and mutual capacitance of electrodes in the touch panel. For example, a pixelated electrode pattern can be configured to include a first row of electrodes being drive electrodes, a second row of electrodes being ground electrodes, a third row of electrodes being sense electrodes to form mutual capacitances with the first row electrodes, a fourth row of electrodes being ground electrodes, and the pattern repeated for the remaining electrode rows. In another example, a pixelated electrode pattern can be configured to include a first electrode being a drive electrode, adjacent electrodes surrounding the first electrode being ground electrodes, adjacent electrodes surrounding the ground electrodes being sense electrodes to form mutual capacitances with the first electrode, and the pattern repeated for the remaining electrodes.

Referring again to FIG. 11, after measuring the mutual capacitances, a user grounding correction factor can be determined based on the self and mutual capacitance measurements (1140) and the correction factor can be used to calculate a touch signal corrected for user poor grounding conditions (1150). Equation (2) can be used to calculate the corrected touch signal.

$$Cm_i = \left[ \frac{Cg}{\sum_i Cm_{i,actual} + Cg} \right] Cm_{i,actual}$$

$$(2)$$

where $Cm_i$ = the captured touch signal at touch electrode $i$, $Cm_{i,actual}$ = the grounding corrected touch signal at electrode $i$, and $Cg = f(Xe_i, Ye_ie_j)$, user ground capacitance, where $Cg$ is a function of $Xe_i$ (self capacitance measurement of touch electrode i when all touch electrode are simultaneously driven, boot-strapped) and $Ye_ie_j$ (mutual capacitance measurement of touch electrode $i$ to touch electrode $j$), and indicative of the user's grounding condition. An alternate way of computing the correction factor form can be $K=Cg/[sum(Cm_{i,actual})+ Cg] = K(Xe_i, Ye_ie_j)$ which leads to a simple global scalar correction factor form of $Cm_i=K\ Cm_{i,actual}$.

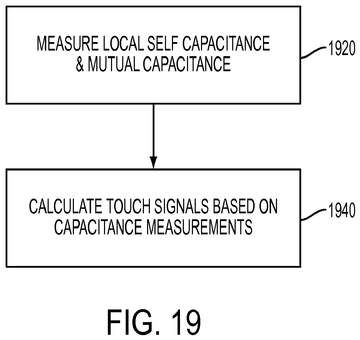

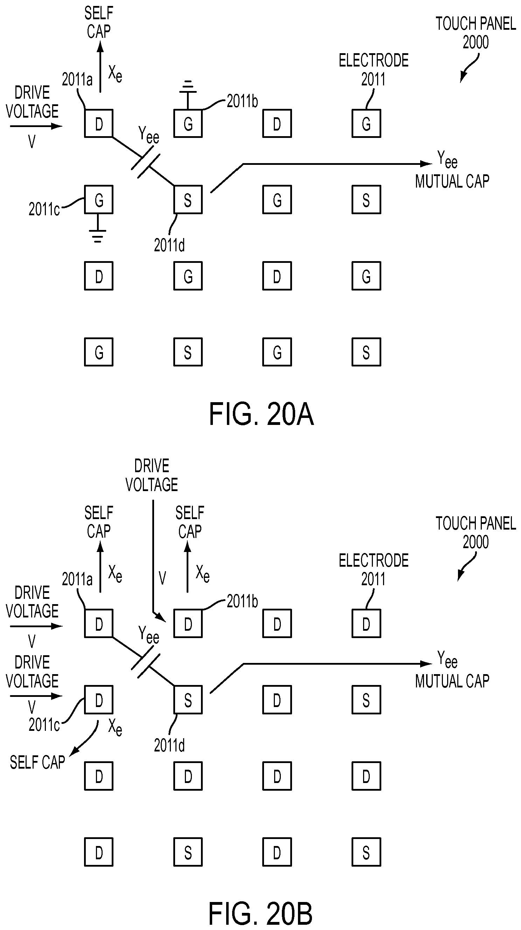

FIG. 19 illustrates another exemplary method for user grounding correction of a touch signal in the pixelated electrode touch panel of FIG. 10. The FIG. 19 method is similar to the FIG. 11 method, but can replace the measuring of global self capacitance with the measuring of local self capacitance and can measure the local and mutual self capacitances simultaneously. In the example of FIG. 19, a touch panel can measure the mutual capacitance Yee between the electrodes and additionally measure local self capacitance Xe at the same time, using a non-boot strap operation (1920). FIG. 20A illustrates an exemplary pixelated electrode pattern measuring self and mutual capacitance. In the example of FIG. 20A, similar to FIG. 14, touch panel 2000 can be configured to form a pixelated electrode pattern with electrode 2011a as a drive electrode, horizontally adjacent electrode 2011b as a ground electrode, vertically adjacent electrode 2011c as another ground electrode, diagonal electrode 2011d as a sense electrode, and the pattern repeated for the remaining electrodes. To measure the local self capacitance, while electrode 2011a is being driven to provide the mutual capacitance Yee between it and sense electrode 2011d, the self capacitance Xe of drive electrode 2011a can be measured. Additional pixelated electrode patterns similar to those of FIGs. 15 through 17 can be formed, in which drive electrode 1411b has its self capacitance measured (FIG. 15), drive electrode 1411c has its self capacitance measured (FIG. 16), and drive electrode 1411d has its self capacitance measured (FIG. 17), for example.

Referring again to FIG. 19, after measuring the self and mutual capacitances, a user grounding correction factor can be determined based on the self and mutual capacitance measurements (1930) and used to calculate a touch signal corrected for user poor grounding conditions (1940). As described previously, Equation (2) can be used to perform the correction.

It should be understood that the pixelated electrode patterns are not limited to that illustrated in FIG. 20A, but can include other or additional patterns suitable for measuring self and mutual capacitance of electrodes in the touch panel. For example, a pixelated electrode pattern can be configured to include a first row of electrodes being drive electrodes, a second row of electrodes being sense electrodes to form mutual capacitances with the first row electrodes, a third row of electrodes being sense electrodes to form mutual capacitances with the first row electrodes, a fourth row of electrodes similar to the second electrode row, and the pattern repeated for the remaining electrode rows. In another example, a pixelated electrode pattern can be configured as a first electrode being a drive electrode, adjacent electrodes surrounding the first electrode being sense electrodes to form mutual capacitances with the first electrode, a second group of adjacent electrodes surrounding the first group being sense electrodes to form mutual capacitances with the first electrode, a third group of adjacent electrodes being similar to the first adjacent group, and the pattern repeated for the remaining electrodes.

FIG. 20B illustrates another exemplary pixelated electrode pattern measuring self and mutual capacitance that can replace the pattern of FIG. 20A. In the example of FIG. 20B, touch panel 2000 can be configured to form a pixelated electrode pattern with electrode 2011a as a drive electrode, electrode 2011b as another drive electrode, electrode 2011c as a third drive electrode, electrode 2011d as a sense electrode, and the pattern repeated for the remaining electrodes. Here, while electrode 2011a is being driven to form the mutual capacitance Yee between it and sense electrode 2011d, the self capacitance Xe of electrode 2011a can be measured. At the same time, electrodes 2011b, 2011c can also be driven and their self capacitances Xe measured. Additional pixelated electrode patterns similar to those of FIGs. 15 and 17 can be formed, except the ground electrodes can be replaced with drive electrodes. For example, similar to FIG. 15, electrodes 1411a, 1411d can be driven and their self capacitances measured. Similar to FIG. 16, electrodes 1411b, 1411c can be driven and their self capacitances measured. Similar to FIG. 17, electrodes 1411a, 1411d can be driven and their self capacitances measured.

It should be understood that the pixelated electrode patterns are not limited to that illustrated in FIG. 20B, but can include other or additional patterns suitable for measuring self and mutual capacitance of electrodes in the touch panel. For example, a pixelated electrode pattern can be configured to include a first row of electrodes being drive electrodes, a second row of electrodes being drive electrodes, a third row of electrodes being sense electrodes to form mutual capacitances with the first row electrodes, a fourth row of electrodes being similar to the second row, and the pattern repeated for the remaining electrode rows. In another example, a pixelated electrode pattern can be configured to include a first electrode being a drive electrode, adjacent electrodes surrounding the first electrode being drive electrodes, a second group of adjacent electrodes surrounding the first adjacent group being sense electrodes to form mutual capacitances with the first electrode, a third group of adjacent electrodes surrounding the second group being similar to the first adjacent group, and the pattern repeated for the remaining electrodes.

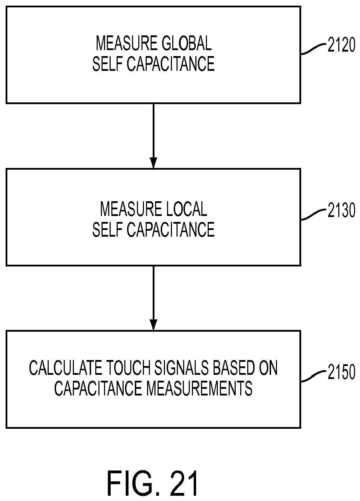

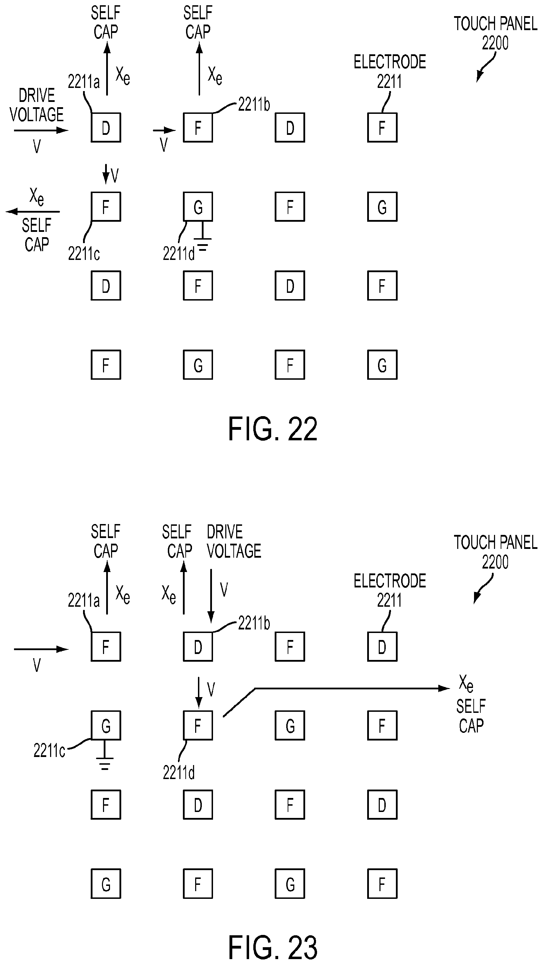

FIG. 21 illustrates still another exemplary method for user grounding correction of a touch signal in the pixelated electrode touch panel of FIG. 10. The FIG. 21 method is similar to the FIG. 11 method, but can replace the measuring of mutual capacitance with the measuring of local self capacitance. In the example of FIG. 21, a touch panel can capture self capacitances at various pixelated electrode patterns in the panel so as to measure the user's grounding condition and use the measurements to calculate touch signal corrected for any poor grounding conditions. Accordingly, the panel can measure global self capacitances Xe of the electrodes in the panel, as illustrated in FIG. 13, in a boot strap operation (2120). The panel can then measure local self capacitances Xe of the electrodes in the panel, in a non-boot strap operation (2130). FIGs. 22 through 25 illustrate exemplary pixelated electrode patterns measuring local self capacitances. In the example of FIG. 22, touch panel 2200 can be configured to form a pixelated electrode pattern with electrode 2211a as a drive electrode, horizontally adjacent electrode 2211b as a following electrode, vertically adjacent electrode 2211c as another following electrode, diagonal electrode 2211d as a ground electrode, and the pattern repeated for the remaining electrodes. The label "D" on certain electrodes 1411 can indicate the electrode is being driven, the label "G," the electrode being grounded, and the label "F," the electrode being driven, but its self capacitance not measured. The drive electrode 2211a can be driven by drive voltage V provided by drive circuitry (not shown), with the self capacitance Xe for that electrode being transmit to sense circuitry (not shown). The following electrodes 2211b, 2211c can also be driven by drive voltage V. By driving the following electrodes 2211b, 2211c, unwanted parasitic capacitances formed between the following electrodes and the adjacent drive electrode 2211a can be minimized, so as not to interfere with the self capacitance Xe from the drive electrode.

To ensure that local self capacitances are measured for all the electrodes, the panel can be configured to form a second pixelated electrode pattern by rotating the pattern of FIG. 22 clockwise 45 degrees. FIG. 23 illustrates the second pixelated electrode pattern. In the example of FIG. 23, touch panel 2200 can be configured to form a pixelated electrode pattern with electrode 2211a now as a following electrode, electrode 2211b as a drive electrode, electrode 2211c as a ground electrode, electrode 2211d as another following electrode, and the pattern repeated for the remaining electrodes. The self capacitance Xe of drive electrode 2211b can be measured.

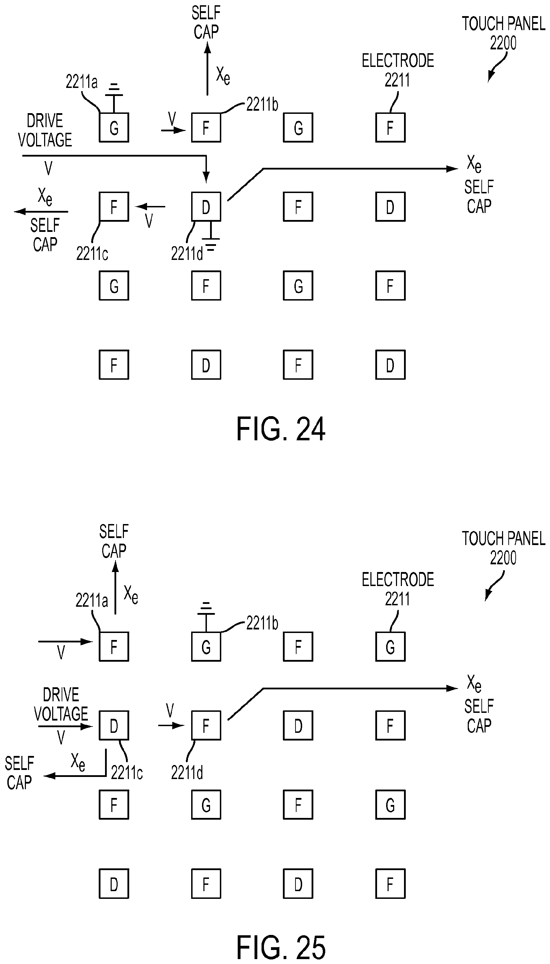

Generally, the patterns of FIGs. 22 and 23 can be sufficient to measure the local self capacitances. However, two more patterns as illustrated in FIGs. 24 and 25 can be used for additional measurements to average with the measurements obtained from the patterns of FIGs. 22 and 23. FIG. 24 illustrates a third pixelated electrode pattern formed by rotating the pattern of FIG. 23 clockwise 45 degrees. In the example of FIG. 24, touch panel 2200 can be configured to form a pixelated electrode pattern with electrode 2211a now as a ground electrode, electrode 2211b as a following electrode, electrode 2211c as another following electrode, electrode 2211d as a drive electrode, and the pattern repeated for the remaining electrodes. The self capacitance Xe of drive electrode 2211d can be measured.

FIG. 25 illustrates a fourth pixelated electrode pattern formed by rotating the pattern of FIG. 24 clockwise 45 degrees. In the example of FIG. 25, touch panel 2200 can be configured to form a pixelated electrode pattern with electrode 2211a now as a following electrode, electrode 2211b as a ground electrode, electrode 2211c as a drive electrode, electrode 2211d as another following electrode, and the pattern repeated for the remaining electrodes. The self capacitance Xe of drive electrode 2211c can be measured.. Accordingly, the local self capacitances Xe can be measured in either two operations (FIGs. 22 and 23 patterns) or four operations (FIGs. 22 through 25 patterns).

It should be understood that the pixelated electrode patterns are not limited to those illustrated in FIGs. 22 through 25, but can include other or additional patterns suitable for measuring self capacitance of electrodes in the touch panel. For example, a pixelated electrode pattern can be configured with a first row of electrodes being drive electrodes, a second row of electrodes electrically following the drive electrodes, a third row of electrodes being ground electrodes, a fourth row of electrodes electrically following the drive electrodes, and the pattern repeated for the remaining electrode rows. In another example, a pixelated electrode pattern can be configured with a first electrode being a drive electrode, adjacent electrodes surrounding the first electrode being following electrodes, adjacent electrodes surrounding the following electrodes being ground electrodes, and the pattern repeated for the remaining electrodes.

Referring again to FIG. 21, after measuring the self capacitances, a user grounding correction factor can be determined based on the self capacitance measurements (2140) and used to calculate a touch signal corrected for user poor grounding conditions (2150). As described previously, Equation (2) can be used to correct for poor grounding conditions.

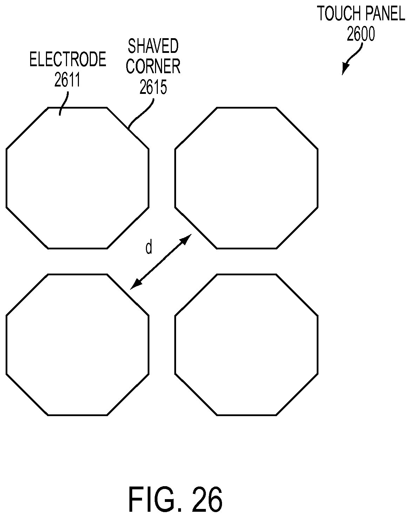

In addition to applying a user grounding correction factor to a touch signal, the structure of the touch electrodes can be designed so as to mitigate poor grounding conditions. FIG. 26 illustrates an exemplary pixelated electrode structure that can be used. In the example of FIG. 26, touch panel 2600 can include an array of touch electrodes 2611 shaped like octagons, with corners 2615 being shaved to form a distance d between diagonal electrodes, although other shapes can be used to provide the distance between diagonal electrodes. This structure can advantageously maximize self capacitance forming touch signals, while minimizing mutual capacitance between diagonal electrodes that can negatively affect touch signals, and electrode to ground capacitance that can negatively affect touch signals.

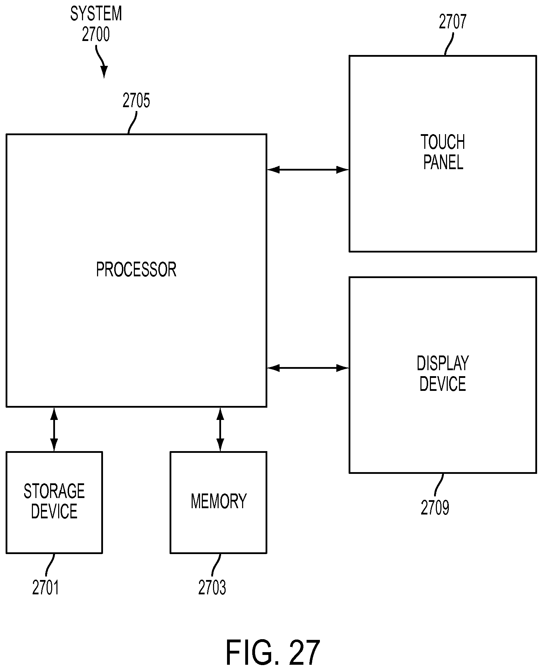

One or more of the touch panels can operate in a system similar or identical to system 2700 shown in FIG. 27. System 2700 can include instructions stored in a non-transitory computer readable storage medium, such as memory 2703 or storage device 2701, and executed by processor 2705. The instructions can also be stored and/or transported within any non-transitory computer

readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The instructions can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

The system 2700 can also include display device 2709 coupled to the processor 2705. The display device 2709 can be used to display a graphical user interface. The system 2700 can further include touch panel 2707, such as in FIGs. 2 and 10, coupled to the processor 2705. Touch panel 2707 can have touch nodes capable of detecting an object touching or hovering over the panel at a location corresponding to a graphical user interface on the display device 2709. The processor 2705 can process the outputs from the touch panel 2707 to perform actions based on the touch or hover event and the displayed graphical user interface.

It is to be understood that the system is not limited to the components and configuration of FIG. 27, but can include other or additional components in multiple configurations according to various examples. Additionally, the components of system 2700 can be included within a single device, or can be distributed between multiple devices. In some examples, the processor 2705 can be located within the touch panel 2707 and/or the display device 2709.

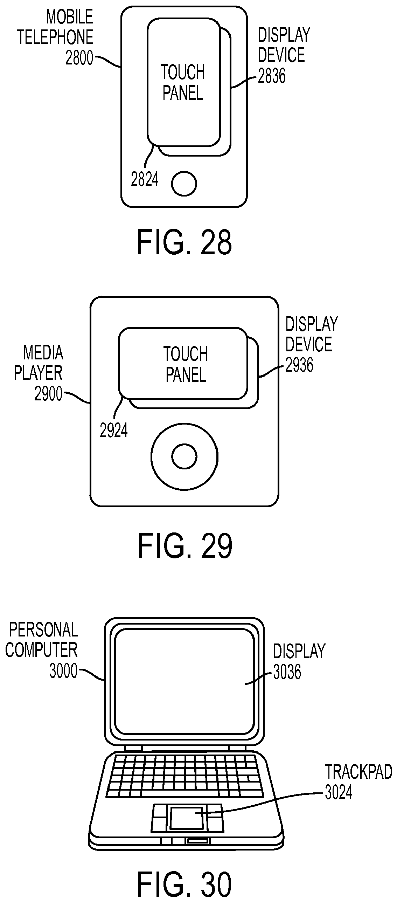

FIG. 28 illustrates an exemplary mobile telephone 2800 that can include touch panel 2824, display 2836, and other computing system blocks that can perform user grounding correction of touch signals in the touch panel according to various examples.

FIG. 29 illustrates an exemplary digital media player 2900 that can include touch panel 2924, display 2936, and other computing system blocks that can perform user grounding correction of touch signals in the touch panel according to various examples.

FIG. 30 illustrates an exemplary personal computer 3000 that can include touch panel (trackpad) 3024, display 3036, and other computing system blocks that can perform user grounding correction of touch signals in the touch panel according to various examples.

The mobile telephone, media player, and personal computer of FIGs. 28 through 30 can advantageously provide more accurate and faster touch signal detection, as well as power savings, and more robustly adapt to various grounding conditions of a user according to various examples.

Therefore, according to the above, some examples of the disclosure are directed to a method for measuring mutual and self capacitance at a touch panel comprising: measuring mutual and self capacitances at multiple touch node patterns in the touch panel; and calculating a touch signal, based on the measurements, the touch signal indicative of an object proximate to the touch panel. Additionally or alternatively to one or more examples disclosed above, the touch panel has a row-column electrode configuration, the touch panel including multiple rows of conductive traces and multiple columns of conductive traces, the columns crossing the rows to form mutual capacitances therebetween. Additionally or alternatively to one or more examples disclosed above, the touch signal comprises a mutual capacitance touch signal. Additionally or alternatively to one or more examples disclosed above, the measuring comprises: simultaneously measuring a first self capacitance of row conductive traces and a second self capacitance of column conductive traces of the touch panel at a first node pattern; measuring a first mutual capacitance between a pair of the row conductive traces at a second node pattern; and measuring a second mutual capacitance between a pair of the column conductive traces at a third node pattern. Additionally or alternatively to one or more examples disclosed above, the measuring comprises: simultaneously measuring a first self capacitance of row conductive traces and a second self capacitance of column conductive traces of the touch panel at a first node pattern; and simultaneously measuring a first mutual capacitance between a pair of the row conductive traces and a second mutual capacitance between a pair of the row and column conductive traces at a second node pattern. Additionally or alternatively to one or more examples disclosed above, the calculating further comprises: calculating the touch signal corrected for at least one of the proximate object being poorly grounded, water on the touch panel, or noise introduced into the touch panel. Additionally or alternatively to one or more examples disclosed above, the touch panel has a pixelated electrode configuration, the touch panel including an array of electrodes to form self capacitances between the electrodes and the object. Additionally or alternatively to one or more examples disclosed above, the touch signal comprises a self capacitance touch signal. Additionally or alternatively to one or more examples disclosed above, the measuring comprises: measuring a self capacitance globally from electrodes of the touch panel at a first node pattern; and measuring a mutual capacitance between a pair of the electrodes at a second node pattern. Additionally or alternatively to one or more examples disclosed above, the measuring comprises: simultaneously measuring a self capacitance locally from at least one of electrodes of the touch panel and a mutual capacitance between a pair of the electrodes at a first node pattern. Additionally or alternatively to one or more examples disclosed above, the measuring comprises: measuring a first self capacitance globally from electrodes of the touch panel at a first node pattern; and measuring a second self capacitance locally from at least one of the electrodes at a second node pattern. Additionally or alternatively to one or more examples disclosed above, the method further comprising: determining a correction factor based on the measured capacitances to correct for an adverse condition at the touch panel. Additionally or alternatively to one or more examples disclosed above, the determining comprises: determining the correction factor based on at least one of a first measurement of a first self capacitance of row conductive traces in the touch panel, a second measurement of a second self capacitance of column conductive traces in the touch panel, a third measurement of a first mutual capacitance between pairs of the row conductive traces, a fourth measurement of a second mutual capacitance between pairs of the column conductive traces, or a fifth measurement of a third mutual capacitance between pairs of the row and column conductive traces. Additionally or alternatively to one or more examples disclosed above, the determining comprises: determining the correction factor based on at least one of a first measurement of a first self capacitance globally from electrodes of the touch panel, a second measurement of a second self capacitance locally from at least one of the electrodes, or a third measurement of a mutual capacitance between a pair of the electrodes.

Other examples of the disclosure are directed to a touch device comprising: a touch panel having a set of touch nodes capable of measuring a mutual capacitance touch and a self capacitance touch; and a processor capable of receiving at least one of a set of mutual capacitance touch measurements or a set of self capacitance touch measurements taken from multiple patterns of the touch nodes, and calculating a touch signal at the touch panel using the at least one set of measurements. Additionally or alternatively to one or more examples disclosed above, the set of touch nodes comprises: multiple rows of conductive traces, each row trace having alternate wide and narrow portions, the wide portions tapering at distal ends to couple to the narrow portions; and multiple columns of conductive traces, each column trace having wide portions tapering at distal ends and bridges connecting the tapered distal ends of the wide portions, wherein the rows and columns cross each other at the narrow portions of the row traces and the bridges of the column traces. Additionally or alternatively to one or more examples disclosed above, a first pattern of the touch nodes comprises rows and columns of conductive traces of the touch panel stimulated simultaneously to provide the set of self capacitance measurements, wherein a second pattern of the touch nodes comprises a pair of the row conductive traces, one of the row pair being stimulated to drive the other of the row pair to transmit at least some of the set of mutual capacitance measurements, wherein a third pattern of the touch nodes comprises a pair of the column conductive traces, one of the column pair being stimulated to drive the other of the column pair to transmit at least others of the set of mutual capacitance measurements, and wherein the processor receives the sets of mutual and self capacitance measurements from the first, second, and third patterns of the nodes. Additionally or alternatively to one or more examples disclosed above, the set of touch nodes comprises: an array of electrodes, each electrode having shaved corners to provide a distance from another electrode. Additionally or alternatively to one or more examples disclosed above, a first pattern of the touch nodes comprises electrodes of the touch panel stimulated simultaneously to provide the set of self capacitance measurements, wherein a second pattern of the touch nodes comprises a first of the electrodes being a drive electrode, a second of the electrodes being a ground electrode, a third of the electrodes being a sense electrode, and a fourth of the electrodes being a ground electrode, the first electrode being stimulated to drive the third electrode to transmit the set of mutual capacitance measurements, and wherein the processor receives the sets of mutual and self capacitance measurements from the first and second patterns of the nodes. Additionally or alternatively to one or more examples disclosed above, the first pattern of the touch nodes comprises a first electrode of the touch panel being a drive electrode, a second electrode being a ground electrode, a third electrode being a sense electrode, and a fourth electrode being a ground electrode, the first electrode being stimulated to provide the set of self capacitance measurements and to drive the third electrode to provide the set of mutual capacitance measurements simultaneously, and wherein the processor receives the sets of mutual and self capacitance measurements from the first pattern of the nodes. Additionally or alternatively to one or more examples disclosed above, the first pattern of the touch nodes comprises electrodes of the touch panel stimulated simultaneously to provide some of the set of self capacitance measurements, wherein a second pattern of the touch nodes comprises a first of the electrodes being a drive electrode, a second of the electrodes being a following electrode, a third of the electrodes being a ground electrode, and a fourth of the electrodes being a following electrode, the first electrode being stimulated to provide others of the set of self capacitance measurements, and wherein the processor receives the set of self capacitance measurements from the first and second patterns of the nodes. Additionally or alternatively to one or more examples disclosed above, the device comprising at least one of a mobile phone, a media player, or a portable computer.

Other examples of the disclosure are directed to a method for using mutual and self capacitance measurements at a touch panel, comprising: measuring a self capacitance and a mutual capacitance at touch nodes of the touch panel, the measurements indicative of an object proximate to the touch panel; determining a correction factor based on the self and mutual capacitance measurements; and calculating a touch signal, based on the correction factor, the touch signal corrected for at least one of a grounding condition of the object, water disposed on the touch panel, or noise introduced into the touch panel.

Other examples of the disclosure are directed to a touch panel comprising: multiple touch nodes capable of detecting an object proximate to the panel, at least one of the touch nodes for detecting a touch of the object in a first operation and for measuring at least one of a self capacitance or a mutual capacitance of the node in a second operation. Additionally or alternatively to one or more examples disclosed above, the multiple touch nodes comprise a row of conductive traces and a column of conductive traces, the row and column traces crossing to form the nodes, wherein the first operation detects a mutual capacitance touch signal, and wherein the second operation measures at least one of a self capacitance of the row and column traces, a mutual capacitance of a pair of the row traces, or a mutual capacitance of a pair of the column traces. Additionally or alternatively to one or more examples disclosed above, the multiple touch nodes comprise an array of electrodes, wherein the first operation detects a self capacitance touch signal, and wherein the second operation measures at least one of a self capacitance of the electrodes or a mutual capacitance of a pair of the electrodes.

Some examples of the disclosure are directed to a touch panel comprising: an array of electrodes capable of sensing a touch; and multiple jumpers capable of selectively coupling groups of the electrodes together to form electrode rows and columns in zigzag patterns, at least some of the jumpers forming the rows and columns crossing each other. Alternatively or additionally to one or more of the examples disclosed above, in some examples the array of electrodes has a linear configuration. Alternatively or additionally to one or more of the examples disclosed above, in some examples each electrode has a solid surface and a square shape. Alternatively or additionally to one or more of the examples disclosed above, in some examples each electrode has an outer electrode and a center electrode, the outer and center electrodes being physically separate. Alternatively or additionally to one or more of the examples disclosed above, in some examples each electrode has a hollow center. Alternatively or additionally to one or more of the examples disclosed above, in some examples an electrode row comprises: a first jumper coupling a first electrode in a first row and first column of the array and a second electrode in a second row and second column of the array and diagonal to the first electrode, the first jumper coupling proximate corners of the first and second electrodes; and a second jumper coupling the second electrode to a third electrode in the first row and third column of the array and diagonal to the second electrode, the second jumper coupling proximate corners of the second and third electrodes, the first and second jumpers forming the electrode row in one of the zigzag patterns. Alternatively or additionally to one or more of the examples disclosed above, in some examples an electrode column comprises: a first jumper coupling a first electrode in a first row and second column of the array and a second electrode in a second row and first column of the array and diagonal to the first electrode, the first jumper coupling proximate corners of the first and second electrodes; and a second jumper coupling the second electrode to a third electrode in the third row and second column of the array and diagonal to the second electrode, the second jumper coupling proximate corners of the second and third electrodes, the first and second jumpers forming the electrode column in one of the zigzag patterns. Alternatively or additionally to one or more of the examples disclosed above, in some examples the zigzag patterns are capable of correcting user grounding conditions in the panel. Alternatively or additionally to one or more of the examples disclosed above, in some examples the panel is incorporated into at least one of a mobile telephone, a media player, or a portable computer.

Some examples of the disclosure are directed to a touch device comprising: a touch panel including: an array of electrodes capable of sensing mutual capacitance and self capacitance, and multiple jumpers capable of selectively coupling groups of the electrodes together to form electrode rows and columns in zigzag patterns; and a processor capable of receiving at least one of a set of mutual capacitance touch measurements or a set of self capacitance touch measurements taken from multiple sensing patterns of the electrodes, and determining a user grounding correction factor for the touch panel using the at least one set of measurements. Alternatively or additionally to one or more of the examples disclosed above, in some examples a first of the sensing patterns comprises the electrode rows and columns of the touch panel, the rows and columns being stimulated simultaneously to provide the set of self capacitance measurements, and a second of the sensing patterns comprises a pair of the electrode rows, one of the row pair being stimulated to drive the other of the row pair to transmit at least some of the set of mutual capacitance measurements, a third of the sensing patterns comprises a pair of the electrode columns, one of the column pair being stimulated to drive the other of the column pair to transmit at least others of the set of mutual capacitance measurements, and the processor receives the sets of mutual and self capacitance measurements from the first, second, and third sensing patterns. Alternatively or additionally to one or more of the examples disclosed above, in some examples a first of the sensing patterns comprises the electrode rows and columns of the touch panel, the rows and columns being stimulated simultaneously to provide the set of self capacitance measurements, a second of the sensing patterns comprises simultaneously a pair of the electrode rows, one of the row pair being stimulated to drive the other of the row pair to transmit at least some of the set of mutual capacitance measurements, and a pair of an electrode row and an electrode column, the row of the row-column pair being stimulated to drive the column of the row-column pair and the column of the row-column pair to transmit at least others of the set of mutual capacitance measurements, and the processor receives the sets of mutual and self capacitance measurements from the first and second sensing patterns.

Some examples of the disclosure are directed to a method for forming a touch panel, comprising: forming an array of electrodes for sensing a touch; forming multiple jumpers between the electrodes; selectively coupling first groups of the electrodes together with first groups of the jumpers to form electrode rows for driving the panel, the electrode rows forming a first zigzag pattern; selectively coupling second groups of the electrodes together with second groups of the jumpers to form electrode columns for transmitting a touch signal indicative of the touch, the electrode columns forming a second zigzag pattern; and crossing at least some of the first and second groups of jumpers. Alternatively or additionally to one or more of the examples disclosed above, in some examples selectively coupling first groups of the electrodes comprises coupling with the first groups of the jumpers adjacent diagonal corners of the first groups of electrodes together in a substantially horizontal direction to form the first zigzag pattern. Alternatively or additionally to one or more of the examples disclosed above, in some examples selectively coupling second groups of the electrodes comprises coupling with the second groups of the jumpers adjacent diagonal corners of the second groups of the electrodes together in a substantially vertical direction to form the second zigzag pattern.

Some examples of the disclosure are directed to a touch panel comprising: an array of electrodes capable of sensing a touch, each electrode having a non-solid surface; and multiple jumpers capable of selectively coupling groups of the electrodes together to form electrode rows and columns, at least some of the jumpers forming the rows and columns crossing each other. Alternatively or additionally to one or more of the examples disclosed above, in some examples the array of electrodes has a diamond configuration. Alternatively or additionally to one or more of the examples disclosed above, in some examples the non-solid surface comprises an outer electrode and a center electrode, the outer and center electrodes being physically separate. Alternatively or additionally to one or more of the examples disclosed above, in some examples the non-solid surface comprises a hollow center. Alternatively or additionally to one or more of the examples disclosed above, in some examples an electrode row comprises some of the jumpers coupling adjacent corners of a row of the electrodes. Alternatively or additionally to one or more of the examples disclosed above, in some examples an electrode column comprises some of the jumpers coupling adjacent corners of a column of the electrodes. Alternatively or additionally to one or more of the examples disclosed above, in some examples the non-solid surface is capable of mitigating noise at the panel. Alternatively or additionally to one or more of the examples disclosed above, in some examples the electrodes are capable of correcting user grounding conditions in the panel.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the appended claims.

**Claims**

1. A method for measuring mutual and self capacitance at a touch panel (200) comprising:

   measuring (120) mutual and self capacitances at multiple touch node patterns in the touch panel;
   determining one or more correction factors, each correction factor having a value that is a function of both the measured mutual and self capacitances; and
   calculating (140) a touch signal based on applying the one or more correction factors to the measured mutual or self capacitances, the touch signal indicative of an object proximate to the touch panel.

2. The method of claim 1, wherein the touch panel (200) has a row-column electrode configuration, the touch panel including multiple rows (201) of conductive traces and multiple columns (202) of conductive traces, the columns crossing the rows to form mutual capacitances therebetween.

3. The method of claim 1, wherein the measuring comprises:

   simultaneously measuring a first self capacitance of row (201) conductive traces and a second self capacitance of column (202) conductive traces of the touch panel (200) at a first node pattern;
   measuring a first mutual capacitance between a pair of the row (201) conductive traces at a second node pattern; and
   measuring a second mutual capacitance between a pair of the column (202) conductive traces at a third node pattern.

4. The method of claim 1, wherein the measuring comprises:

   simultaneously measuring a first self capacitance of row (201) conductive traces and a second self capacitance of column (202) conductive traces of the touch panel at a first node pattern; and
   simultaneously measuring a first mutual capacitance between a pair of the row (201) conductive traces and a second mutual capacitance between a pair of the row (201) and column (202) conductive traces at a second node pattern.

5. The method of claim 1, wherein the calculating further comprises:
   calculating the touch signal corrected for at least one of the proximate object being poorly grounded, water on the touch panel, or noise introduced into the touch panel (200).

6. The method of claim 1, wherein the touch panel (200) has a pixelated electrode configuration, the touch panel including an array of electrodes (1011) to form self capacitances between the electrodes and the object.

7. The method of claim 1, wherein the measuring comprises:

   measuring a self capacitance globally from electrodes (1011) of the touch panel at a first node pattern; and
   measuring a mutual capacitance between a pair of the electrodes (1011) at a second node pattern.

8. The method of claim 1, wherein the measuring comprises:
   simultaneously measuring a self capacitance locally from at least one of electrodes (1011) of the touch panel (200) and a mutual capacitance between a pair of the electrodes (1011) at a first node pattern.

9. The method of claim 1, wherein the measuring comprises:

   measuring a first self capacitance globally from electrodes (1011) of the touch panel (200) at a first node pattern; and
   measuring a second self capacitance locally from at least one of the electrodes (1011) at a second node pattern.

10. The method of claim 1, wherein:
    the correction factor is applied to the measured mutual or self capacitances to correct for an adverse condition at the touch panel (200), the adverse condition including at least one of a grounding condition of a proximate object, water disposed on the touch panel, or noise introduced into the touch panel.

**11.** The method of claim 10, wherein the determining comprises:
determining the correction factor based on at least one of a first measurement of a first self capacitance of row conductive traces in the touch panel (200), a second measurement of a second self capacitance of column conductive traces in the touch panel (200), a third measurement of a first mutual capacitance between pairs of the row conductive traces, a fourth measurement of a second mutual capacitance between pairs of the column conductive traces, or a fifth measurement of a third mutual capacitance between pairs of the row and column conductive traces.

**12.** The method of claim 10, wherein the determining comprises:
determining the correction factor based on at least one of a first measurement of a first self capacitance globally from electrodes (1011) of the touch panel (200), a second measurement of a second self capacitance locally from at least one of the electrodes (1011), or a third measurement of a mutual capacitance between a pair of the electrodes (1011).

**13.** The method of claim 1, wherein a first pattern of the touch nodes comprises rows and columns of conductive traces of the touch panel stimulated simultaneously to provide the set of self capacitance measurements,
wherein a second pattern of the touch nodes comprises a pair of the row conductive traces, one of the row pair being stimulated to drive the other of the row pair to transmit at least some of the set of mutual capacitance measurements,
wherein a third pattern of the touch nodes comprises a pair of the column conductive traces, one of the column pair being stimulated to drive the other of the column pair to transmit at least others of the set of mutual capacitance measurements, and
the method further comprises receiving the sets of mutual and self capacitance measurements from the first, second, and third patterns of the nodes.

**14.** A non-transitory computer readable storage medium having stored thereon a set of instructions for measuring mutual and self capacitance at a touch sensitive device (200), that when executed by a processor causes the processor to perform the method according to any of claims 1 to 13.

**15.** A touch device (2836, 2936, 3036) with a touch panel (200, 2824, 2924, 3024) having a set of nodes, and a processor being configured to perform the method according to any of claims 1 to 13.


**Patentansprüche**

**1.** Verfahren zum Messen von Betriebskapazität und Eigenkapazität bei einem Touch Panel (200), umfassend:

Messen (120) von Betriebskapazitäten und Eigenkapazitäten an mehreren Berührungsknotenmustern in dem Touch Panel;
Bestimmen von einem oder mehreren Korrekturfaktoren, wobei jeder Korrekturfaktor einen Wert aufweist, der eine Funktion von sowohl den gemessenen Betriebskapazitäten als auch den gemessenen Eigenkapazitäten ist; und
Berechnen (140) eines Berührungssignals basierend auf einem Anwenden des einen oder der mehreren Korrekturfaktoren auf die gemessenen Betriebskapazitäten oder die gemessenen Eigenkapazitäten, wobei das Berührungssignal auf ein Objekt in der Nähe des Touch Panels hinweisend ist.

**2.** Verfahren Anspruch 1, wobei das Touch Panel (200) eine Reihen-Spalten-Elektrodenkonfiguration aufweist, wobei das Touch Panel mehrere Reihen-(201)-Leiterbahnen und mehrere Spalten-(202)-Leiterbahnen beinhaltet, wobei die Spalten die Reihen kreuzen, um Betriebskapazitäten dazwischen zu bilden.

**3.** Verfahren nach Anspruch 1, wobei das Messen umfasst:

gleichzeitiges Messen einer ersten Eigenkapazität der Reihen-(201)-Leiterbahnen und einer zweiten Eigenkapazität der Spalten-(202)-Leiterbahnen des Touch Panels (200) an einem ersten Knotenmuster;
Messen einer ersten Betriebskapazität zwischen einem Paar von Reihen-(201)-Leiterbahnen an einem zweiten Knotenmuster; und
Messen einer zweiten Betriebskapazität zwischen einem Paar von Spalten-(202)-Leiterbahnen an einem dritten Knotenmuster.

4. Verfahren nach Anspruch 1, wobei das Messen umfasst:

gleichzeitig Messen einer ersten Eigenkapazität von Reihen-(201)-Leiterbahnen und einer zweiten Eigenkapazität von Spalten-(202)-Leiterbahnen des Touch Panels an einem ersten Knotenmuster; und
gleichzeitiges Messen einer ersten Betriebskapazität zwischen einem Paar von Reihen-(201)-Leiterbahnen und einer zweiten Betriebskapazität zwischen einem Paar von Reihen-(201)-Leiterbahnen und Spalten-(202)-Leiterbahnen an einem zweiten Knotenmuster.

5. Verfahren nach Anspruch 1, wobei das Berechnen weiter umfasst:
Berechnen des Berührungssignals, das für zumindest eines von einem schlecht geerdeten nahen Objekt, Wasser auf dem Touch Panel oder Rauschen, das in das Touch Panel (200) eingeführt wird, korrigiert ist.

6. Verfahren nach Anspruch 1, wobei das Touch Panel (200) eine pixelartige Elektrodenkonfiguration aufweist, wobei das Touch Panel eine Anordnung von Elektroden (1011) beinhaltet, um Eigenkapazitäten zwischen den Elektroden und dem Objekt zu bilden.

7. Verfahren nach Anspruch 1, wobei das Messen umfasst:

globales Messen einer Eigenkapazität von Elektroden (1011) des Touch Panels an einem ersten Knotenmuster; und
Messen einer Betriebskapazität zwischen einem Paar der Elektroden (1011) an einem zweiten Knotenmuster.

8. Verfahren nach Anspruch 1, wobei das Messen umfasst:
gleichzeitiges lokales Messen einer Eigenkapazität von zumindest einer der Elektroden (1011) des Touch Panels (200) und einer Betriebskapazität zwischen einem Paar von den Elektroden (1011) an einem ersten Knotenmuster.

9. Verfahren nach Anspruch 1, wobei das Messen umfasst:

globales Messen einer ersten Eigenkapazität von Elektroden (1011) des Touch Panels (200) an einem ersten Knotenmuster; und
lokales Messen einer zweiten Eigenkapazität von zumindest einer der Elektroden (1011) an einem zweiten Knotenmuster.

10. Verfahren nach Anspruch 1, wobei:
der Korrekturfaktor auf die gemessenen Betriebskapazitäten oder Eigenkapazitäten angewandt wird, um eine nachteilige Bedingung bei dem Touch Panel (200) zu korrigieren, wobei die nachteilige Bedingung zumindest eines beinhaltet von einer Erdungsbedingung eines nahen Objekts, Wasser, das sich auf dem Touch Panel befindet oder Rauschen, das in das Touch Panel eingeführt wird.

11. Verfahren nach Anspruch 10, wobei das Bestimmen umfasst:
Bestimmen des Korrekturfaktors basierend auf zumindest einem aus einer ersten Messung einer ersten Eigenenkapazität von Reihenleiterbahnen in dem Touch Panel (200), einer zweiten Messung einer zweiten Eigenkapazität von Spaltenleiterbahnen in dem Touch Panel (200), einer dritten Messung einer ersten Betriebskapazität zwischen Paaren der Reihenleiterbahnen, einer vierten Messung einer zweiten Betriebskapazität zwischen Paaren der Spaltenleiterbahnen oder einer fünften Messung einer dritten Betriebskapazität zwischen Paaren der Reihen- und Spaltenleiterbahnen.

12. Verfahren nach Anspruch 10, wobei das Bestimmen umfasst:
Bestimmen des Korrekturfaktors basierend auf zumindest einem von einer ersten globalen Messung einer ersten Eigenkapazität von Elektroden (1011) des Touch Panels (200), einer zweiten lokalen Messung von einer zweiten Eigenkapazität von zumindest einer der Elektroden (1011) und einer dritten Messung einer Betriebskapazität zwischen einem Paar der Elektroden (1011).

13. Verfahren nach Anspruch 1, wobei ein erstes Muster der Berührungsknoten Reihen und Spalten von Leiterbahnen des Touch Panels umfasst, die gleichzeitig stimuliert werden, um den Satz von Eigenkapazitätsmessungen bereitzustellen,
wobei ein zweites Muster der Berührungsknoten ein Paar der Reihenleiterbahnen umfasst, wobei eine des Reihenpaars stimuliert wird, um die andere des Reihenpaars anzutreiben, und zumindest etwas von dem Satz von Betriebskapazitätsmessungen zu übertragen,

wobei ein drittes Muster der Berührungsknoten ein Paar der Spaltenleiterbahnen umfasst, wobei das Spaltenpaar stimuliert wird, um die andere des Spaltenpaars anzutreiben, um zumindest andere des Satzes der Betriebskapazitätsmessungen zu übertragen; und

wobei das Verfahren weiter ein Empfangen der Sätze von Betriebskapazitätsmessungen und Eigenkapazitätsmessungen von den ersten, dem zweiten und dem dritten Muster der Knoten umfasst.

**14.** Nichtflüchtiges computerlesbares Speichermedium, auf dem ein Satz von Anweisungen zum Messen von Betriebskapazität und Eigenkapazität bei einer berührungsempfindlichen Vorrichtung (200) gespeichert ist, der, wenn er von einem Prozessor ausgeführt wird, den Prozessor veranlasst, das Verfahren gemäß einem der Ansprüche 1 bis 13 auszuführen.

**15.** Berührungsvorrichtung (2836, 2936, 3036) mit einem Touch Panel (200, 2824, 2924, 3024), das einen Satz von Knoten und einen Prozessor aufweist, der eingerichtet ist, um das Verfahren gemäß einem der Ansprüche 1 bis 13 auszuführen.

**Revendications**

**1.** Un procédé de mesure de capacité propre et mutuelle au niveau d'un panneau tactile (200) comprenant :

la mesure (120) des capacités propres et mutuelles au niveau de motifs multiples de noeuds tactiles dans le panneau tactile ;
la détermination d'un ou plusieurs facteurs de correction, chaque facteur de correction ayant une valeur qui est une fonction des capacités mesurées à la fois propres et mutuelles ; et
le calcul (140) d'un signal tactile sur la base de l'application des un ou plusieurs facteurs de correction aux capacités propres ou mutuelles mesurées, le signal tactile étant représentatif d'un objet à proximité du panneau tactile.

**2.** Le procédé de la revendication 1, dans lequel le panneau tactile (200) possède une configuration d'électrodes en rangées et en colonnes, le panneau tactile comprenant de multiples rangées (201) de pistes conductrices et de multiples colonnes (202) de pistes conductrices, les colonnes croisant les rangées pour former entre elles deux des capacités mutuelles.

**3.** Le procédé de la revendication 1, dans lequel la mesure comprend :

la mesure simultanée d'une première capacité propre de piste conductrice de rangée (201) et une seconde capacité propre de piste conductrice de colonne (202) du panneau tactile (200) au niveau d'un premier motif de noeud ;
la mesure d'une première capacité mutuelle entre une paire de pistes conductrices de rangée (201) au niveau d'un second motif de noeud ; et
la mesure d'une seconde capacité mutuelle entre une paire de pistes conductrices de colonne (202) et un troisième motif de noeud.

**4.** Le procédé de la revendication 1, dans lequel la mesure comprend :

la mesure simultanée d'une première capacité propre de piste conductrice de rangée et d'une seconde capacité propre de piste conductrice de colonne (202) du panneau tactile au niveau d'un premier motif de noeud ; et
la mesure simultanée d'une première capacité mutuelle entre une paire de pistes conductrices de rangée (201) et une seconde capacité mutuelle entre une paire de pistes conductrices de rangée (201) et de colonne (202) au niveau d'un second motif de noeud.

**5.** Le procédé de la revendication 1, dans lequel le calcul comprend en outre :
le calcul du signal tactile pour le corriger d'au moins l'une des situations où l'objet à proximité est mal mis à la masse, où il y a de l'eau sur le panneau tactile, ou où il y a du bruit introduit dans le panneau tactile (200).

**6.** Le procédé de la revendication 1, dans lequel le panneau tactile (200) présente une configuration d'électrode pixélisée, le panneau tactile comprenant un réseau d'électrodes (1011) pour former des capacités propres entre les électrodes et l'objet.

**7.** Le procédé de la revendication 1, dans lequel la mesure comprend :

la mesure d'une capacité propre globalement à partir des électrodes (1011) du panneau tactile au niveau d'un premier motif de noeud ; et
la mesure d'une capacité mutuelle entre une paire des électrodes (1011) au niveau d'un second motif de noeud.

**8.** Le procédé de la revendication 1, dans lequel la mesure comprend :
la mesure simultanée d'une capacité propre localement à partir d'au moins l'une des électrodes (1011) du panneau tactile (200) et d'une capacité mutuelle entre une paire des électrodes (1011) au niveau d'un premier motif de noeud.

**9.** Le procédé de la revendication 1, dans lequel la mesure comprend :

la mesure d'une première capacité propre globalement à partir des électrodes (1011) du panneau tactile (200) au niveau d'un premier motif de noeud ; et
la mesure d'une seconde capacité propre localement à partir d'au moins l'une des électrodes (1011) au niveau d'un second motif de noeud.

**10.** Le procédé de la revendication 1, dans lequel :
le facteur de correction est appliqué aux capacités mesurées propres ou mutuelles pour les corriger d'une situation préjudiciable au niveau du panneau tactile, la situation préjudiciable comprenant au moins l'une d'entre une situation de mise à la masse d'un objet proche, d'eau présente sur le panneau tactile, ou de bruit introduit dans le panneau tactile.

**11.** Le procédé de la revendication 10, dans lequel la détermination comprend :
la détermination du facteur de correction sur la base d'au moins l'une d'entre une première mesure d'une première capacité propre de pistes conductrices de rangée dans le panneau tactile (200), d'une seconde mesure d'une seconde capacité propre de pistes conductrices de colonne dans le panneau tactile (200), d'une troisième mesure d'une première capacité mutuelle entre des paires des pistes conductrices de rangée, d'une quatrième mesure d'une seconde capacité mutuelle entre des paires des pistes conductrices de colonne, ou d'une cinquième mesure d'une troisième capacité mutuelle entre des paires des pistes conductrices de colonne et de rangée.

**12.** Le procédé de la revendication 10, dans lequel la détermination comprend :
la détermination du facteur de correction sur la base d'au moins l'une d'entre une première mesure d'une première capacité propre globalement à partir des électrodes (1011) du panneau tactile (200), une seconde mesure d'une seconde capacité propre localement à partir d'au moins l'une des électrodes (1011), ou une troisième mesure d'une capacité mutuelle entre une paire des électrodes (1011).

**13.** Le procédé de la revendication 1, dans lequel un premier motif des noeuds tactiles comprend des rangées et des colonnes de pistes conductrices du panneau tactile stimulées simultanément pour produire l'ensemble de mesures de capacités propres, dans lequel un second motif des noeuds tactiles comprend une paire des pistes conductrices de rangée, l'une des paires de rangée étant stimulée pour piloter l'autre des paires de rangée pour émettre au moins certaines des mesures de l'ensemble des mesures de capacité mutuelle,
dans lequel un troisième motif des noeuds tactiles comprend une paire des pistes conductrices de colonne, l'une des paires de colonne étant stimulée pour piloter l'autre des paires de colonne pour émettre au moins d'autres mesures de l'ensemble de mesures de capacité mutuelle, et
le procédé comprend en outre la réception des ensembles des mesures de capacité propre et mutuelle en provenance du premier, du second et du troisième motif des noeuds.

**14.** Un support de stockage non transitoire lisible par calculateur dans lequel est stocké un ensemble d'instructions pour la mesure de capacités propres et mutuelles au niveau d'un dispositif sensible au toucher (200) qui, lorsqu'elles sont exécutées par un processeur, font en sorte que le processeur met en oeuvre le procédé selon l'une des revendications 1 à 13.

**15.** Un dispositif tactile (2836, 2936, 3036) avec un panneau tactile (200, 2824, 2924, 3024) possédant un ensemble de noeuds, et un processeur qui est configuré pour mettre en oeuvre le procédé selon l'une des revendications 1 à 13.

MEASURE SELF & MUTUAL CAPACITANCES AT VARIOUS TOUCH NODE PATTERNS —120

CALCULATE TOUCH SIGNALS BASED ON CAPACITANCE MEASUREMENTS —140

## FIG. 1

TOUCH PANEL
200

$C_{r1}$

FINGER

$C_{c1}$

$C_g$

ROW 201
TOUCH NODE 206

$C_{r2}$

$C_{c2}$

206
TOUCH NODE

COL 202

## FIG. 2

MEASURE ROW & COLUMN SELF CAPACITANCE — 310

MEASURE ROW TO COLUMN MUTUAL CAPACITANCE — 320

MEASURE ROW MUTUAL CAPACITANCE — 330

MEASURE COLUMN MUTUAL CAPACITANCE — 340

CALCULATE TOUCH SIGNALS BASED ON CAPACITANCE MEASUREMENTS — 360

FIG. 3

FIG. 4

FIG. 5

TOUCH PANEL
600

DRIVE
VOLTAGE
V

$Y_{rr}$

$Y_{rr}$
ROW
MUTUAL CAP

601 ROW

611 ROW

621 ROW

631 ROW

COL 602

FIG. 6A

TOUCH PANEL
600

DRIVE
VOLTAGE
V

$Y_{rr}$

$Y_{rr}$
ROW
MUTUAL CAP

601 ROW

611 ROW

621 ROW

631 ROW

COL 602

FIG. 6B

FIG. 7

MEASURE ROW & COLUMN
SELF CAPACITANCE ⟋820

MEASURE ROW-ROW MUTUAL
CAPACITANCE & ROW-COLUMN
MUTUAL CAPACITANCE ⟋830

CALCULATE TOUCH SIGNALS BASED ON
CAPACITANCE MEASUREMENTS ⟋850

# FIG. 8A

MEASURE ROW & COLUMN
SELF CAPACITANCE ⟶ 860

MEASURE ROW-COLUMN
MUTUAL CAPACITANCE ⟶ 870

CALCULATE TOUCH SIGNALS BASED ON
CAPACITANCE MEASUREMENTS ⟶ 890

FIG. 8B

COL
902

COL WIDE
PORTION
902a

TOUCH PANEL
900

ROW WIDE PORTION
901a

922 TAPERED END

903 BRIDGE

ROW 901

ROW NARROW PORTION

901b

TAPERED END
911

FIG. 9

FIG. 10

FIG. 11

TOUCH PANEL
1200

TOUCH
SIGNAL

$C_S$

DRIVE
VOLTAGE

ELECTRODE
1211

V

FIG. 12

TOUCH PANEL
1300

ELECTRODE
1311

ALL DRIVE
VOLTAGE

ALL SELF
CAP

V

$X_e$

FIG. 13

FIG. 14

FIG. 15

FIG. 16

FIG. 17

MUTUAL
CAP

TOUCH PANEL
1800

$Y_{ee}$

ELECTRODE
1811

1811a

V

DRIVE
VOLTAGE

D

S

1811b

D

S

$Y_{ee}$

S

D

S

D

D

S

D

S

S

D

S

D

## FIG. 18A

DRIVE
VOLTAGE

TOUCH PANEL
1800

$Y_{ee}$

ELECTRODE
1811

1811a

V

S

D

1811b

S

D

$Y_{ee}$

MUTUAL
CAP

D

S

D

S

S

D

S

D

D

S

D

S

## FIG. 18B

```
┌─────────────────────────────────┐
│  MEASURE LOCAL SELF CAPACITANCE │ ──1920
│      & MUTUAL CAPACITANCE        │
└─────────────────────────────────┘
                 │
                 ▼
┌─────────────────────────────────┐
│  CALCULATE TOUCH SIGNALS BASED ON│ ──1940
│    CAPACITANCE MEASUREMENTS      │
└─────────────────────────────────┘
```

FIG. 19

FIG. 20A

FIG. 20B

```
┌─────────────────────────────┐
│                             │
│      MEASURE GLOBAL         │─── 2120
│      SELF CAPACITANCE       │
│                             │
└─────────────────────────────┘
              │
              ▼
┌─────────────────────────────┐
│                             │
│      MEASURE LOCAL          │─── 2130
│      SELF CAPACITANCE       │
│                             │
└─────────────────────────────┘
              │
              ▼
┌─────────────────────────────┐
│  CALCULATE TOUCH SIGNALS    │
│  BASED ON                   │─── 2150
│  CAPACITANCE MEASUREMENTS   │
└─────────────────────────────┘
```

# FIG. 21

FIG. 22

FIG. 23

FIG. 24

FIG. 25

TOUCH PANEL
2600

ELECTRODE
2611

SHAVED
CORNER
2615

d

FIG. 26

SYSTEM
2700

2705

PROCESSOR

2707

TOUCH
PANEL

DISPLAY
DEVICE

2709

STORAGE
DEVICE

MEMORY

2701

2703

FIG. 27

MOBILE
TELEPHONE
2800

TOUCH
PANEL

DISPLAY
DEVICE
2836

2824

## FIG. 28

MEDIA
PLAYER
2900

TOUCH
PANEL

DISPLAY
DEVICE
2936

2924

## FIG. 29

PERSONAL
COMPUTER
3000

DISPLAY
3036

TRACKPAD
3024

## FIG. 30

TOUCH AND WATER CONTACT SCENARIOS

FIG. 31

ELECTRODE
3211

C0
COLUMN
3202

C1

TOUCH PANEL
3200

R0
ROW
3201

COLUMN
JUMPER
3222

ROW
JUMPER
3221

R0

R1

R1

C0

C1

## FIG. 32

TOUCH PANEL
3200

3343 COVER GLASS

3211 ROW & COLUMN ELECTRODES

3345 LAMINATE

3347 BACK PLATE

3349 COLOR FILTER

## FIG. 33

ELECTRODE
3411

OUTER
ELECTRODE
3411a

CENTER ELECTRODE
3411b

FIG. 34

HOLLOW
ELECTRODE
3511

FIG. 35

FIG. 36

FIG. 37

EP 3 033 660 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012154324 A1

- US 2011025629 A1